(19) **Europäisches Patentamt / European Patent Office / Office européen des brevets**

(11) **EP 4 354 997 A1**

(12) **EUROPEAN PATENT APPLICATION**
published in accordance with Art. 153(4) EPC

(43) Date of publication:
**17.04.2024  Bulletin 2024/16**

(21) Application number: **22841125.2**

(22) Date of filing: **17.06.2022**

(51) International Patent Classification (IPC):
*H04W 72/04* (2023.01)

(52) Cooperative Patent Classification (CPC):
**H04L 5/00; H04W 72/04; H04W 72/0446;
H04W 72/0453; H04W 72/12**

(86) International application number:
**PCT/CN2022/099642**

(87) International publication number:
**WO 2023/284485 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **14.07.2021  CN 202110797862**

(71) Applicant: **Huawei Technologies Co., Ltd.
Longgang
Shenzhen, Guangdong 518129 (CN)**

(72) Inventors:
• **LI, Shengyu
Shenzhen, Guangdong 518129 (CN)**
• **GUAN, Lei
Shenzhen, Guangdong 518129 (CN)**
• **LI, Ruijie
Shenzhen, Guangdong 518129 (CN)**
• **MA, Ruixiang
Shenzhen, Guangdong 518129 (CN)**
• **GUO, Zhiheng
Shenzhen, Guangdong 518129 (CN)**
• **SONG, Xinghua
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **SIGNAL TRANSMISSION METHOD AND APPARATUS**

(57)    This application discloses a signal transmission method and apparatus. The method includes: A network device sends scheduling information of at least one of two carriers whose communication directions are opposite on a target OFDM symbol; a terminal device performs channel transmission of a target carrier on the target OFDM symbol based on the scheduling information, where the target carrier is one of carriers that are of the two carriers whose directions are opposite and that have channel transmission on the target OFDM symbol; and the network device performs channel transmission on the target OFDM symbol and the target carrier. In embodiments of this application, a time domain resource is allocated to a carrier on which transmission scheduling is currently performed, thereby improving transmission resource utilization and reducing a waiting delay.

FIG. 5

**Description**

This application claims priority to Chinese Patent Application No. 202110797862.1, filed with the China National Intellectual Property Administration on July 14, 2021 and entitled "SIGNAL TRANSMISSION METHOD AND APPARATUS", which is incorporated herein by reference in its entirety.

**TECHNICAL FIELD**

This application relates to the field of communication technologies, and in particular, to a signal transmission method and apparatus.

**BACKGROUND**

A 5G communication system is dedicated to supporting higher system performance and supporting a plurality of service types, different deployment scenarios, and a wider spectrum range. The plurality of service types include enhanced mobile broadband (enhanced Mobile Broadband, eMBB), massive machine type communication (massive machine type communication, mMTC), ultra-reliable and low-latency communications (ultra-reliable and low-latency communications, URLLC), a multimedia broadcast multicast service (multimedia broadcast multicast service, MBMS), a positioning service, and the like. The different deployment scenarios include an indoor hotspot (indoor hotspot) scenario, a dense urban (dense urban) scenario, a suburban scenario, an urban macro (urban macro) coverage scenario, a high-speed railway scenario, and the like. The wider spectrum range is that 5G supports a spectrum range up to 100 GHz. The spectrum range includes a low-frequency part below 6 GHz (GHz), and also includes a high-frequency part ranging from 6 GHz to 100 GHz.

A frequency band deployed by a conventional macro base station is usually of a frequency division duplex (frequency division duplex, FDD) frame structure or of a time division duplex (time division duplex, TDD) frame structure. For the frequency band of the TDD frame structure, transmission of an uplink (or downlink) slot can be performed only after transmission of all downlink (or uplink) slots is completed, causing a problem of an excessively long waiting delay.

To resolve the foregoing problem, a self-contained (self-contained) frame structure is introduced in 5G NR. A slot is divided into first n downlink symbols, middle s flexible symbols, and last r uplink symbols. However, the self-contained frame structure has a problem of large uplink-downlink switching overheads and large demodulation reference signal (demodulation reference signal, DMRS) overheads for data transmission. Based on this, a solution of a complementary frame structure design is proposed. A core of the solution is to introduce another frequency band whose frame structure is nU:mF:rD based on an existing frequency band whose frame structure is nD:mF:rU, to form complementation. In this way, a frequency band may be dynamically selected, so that there is no extra waiting delay. In addition, because each frequency band is of a TDD frame structure, a downlink transmission channel may be estimated by using an uplink reference signal, thereby improving spectrum efficiency.

However, when the foregoing two frequency bands with different frame structures are located in one band, a terminal device usually does not have a capability of simultaneously receiving downlink data and sending uplink data, and cannot flexibly switch a frequency band and select transmission.

**SUMMARY**

Embodiments of this application provide a signal transmission method and apparatus. A time domain resource is allocated to a carrier on which transmission scheduling is currently performed, to meet a requirement of a terminal for unidirectional transmission on a target OFDM symbol. In addition, it is ensured that the time domain resource is used for current transmission instead of waiting, thereby improving transmission resource utilization and reducing a waiting delay.

According to a first aspect, a signal transmission method is provided. The method includes: receiving scheduling information of at least one of a first carrier and a second carrier on a target orthogonal frequency division multiplexing OFDM symbol, where communication directions of the first carrier and the second carrier on the target OFDM symbol are opposite, and the communication directions include uplink and downlink; and performing channel transmission of a target carrier on the target OFDM symbol, where the target carrier is one carrier that is determined based on the scheduling information, that is of the first carrier and the second carrier, and that has channel transmission on the target OFDM symbol.

In this embodiment of this application, the scheduling information on the target OFDM symbol is obtained to determine the target carrier that has channel transmission on the target OFDM symbol, so that when the channel transmission of the target carrier is performed on the target OFDM symbol, a requirement of performing unidirectional transmission of only one carrier is met, and a time domain resource is preferentially allocated to a carrier that has a transmission requirement currently, and is not used to wait for transmission that has not arrived, thereby improving transmission resource utilization and reducing a waiting delay.

In a possible example, the scheduling information is TDD frame structure configuration information of the first carrier and/or the second carrier, or downlink control information DCI of the first carrier and/or the second carrier.

In a possible example, the TDD frame structure configuration information is indicated by a network device by using RRC signaling.

In a possible example, the first carrier and the second carrier are two carriers in one band. Optionally, the band corresponds to one radio frequency filter.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

In a possible example, that the target carrier is one of carriers that are of the first carrier and the second carrier and that have channel transmission includes: If one of the first carrier and the second carrier has channel transmission, and the other carrier does not have channel transmission, the target carrier is the carrier that has channel transmission.

In a possible example, the first carrier has channel transmission on the target OFDM symbol, the target carrier is the first carrier, channel transmission of the first carrier is downlink channel transmission, and the downlink channel transmission includes at least one of the following: a synchronization signal/broadcast channel block SSB, a physical downlink control channel PDCCH, a physical downlink shared channel PDSCH, or a channel state information-reference signal CSI-RS; or the first carrier has channel transmission on the target OFDM symbol, the target carrier is the first carrier, channel transmission of the first carrier is uplink channel transmission, and the uplink channel transmission includes at least one of the following: a physical uplink shared channel PUSCH, a physical uplink control channel PUCCH, a physical random access channel PRACH, or an uplink sounding reference signal SRS.

In a possible example, that the target carrier is one of carriers that are of the first carrier and the second carrier and that have channel transmission includes: If both the first carrier and the second carrier have channel transmission on the target OFDM symbol, the first carrier includes channel transmission scheduled or triggered by using downlink control information DCI, and the second carrier includes channel transmission configured by using system information or RRC signaling, the target carrier is the first carrier.

In this embodiment of this application, when the first carrier has the channel transmission scheduled or triggered by using the DCI on the target OFDM symbol, and the second carrier has the channel transmission configured by using the system information or the RRC signaling on the target OFDM symbol, the channel transmission of the first carrier is performed on the target OFDM symbol, so that a network device may temporarily schedule channel transmission of a terminal device, thereby improving flexibility of channel transmission configuration.

In a possible example, when the channel transmission scheduled or triggered by using the downlink control information DCI is uplink channel transmission, the uplink channel transmission includes at least one of the following: a PUSCH, a PUCCH carrying a hybrid automatic repeat request-acknowledgment HARQ-ACK of a PDSCH that is dynamically scheduled, a PUCCH carrying aperiodic-channel state information A-CSI, an aperiodic SRS, and a PRACH; and when the channel transmission scheduled or triggered by using the downlink control information DCI is downlink channel transmission, the downlink channel transmission includes at least one of the following: a PDSCH and an aperiodic CSI-RS.

In a possible example, when the channel transmission configured by using the system information or the RRC signaling is downlink transmission, the downlink channel transmission includes at least one of the following: a PDCCH, a semi-persistent scheduling SPS PDSCH, a periodic or semi-persistent channel state information-reference signal CSI-RS, and an SSB; and when the channel transmission configured by using the system information or the RRC signaling is uplink transmission, the downlink channel transmission includes one or more of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, and a PRACH.

In a possible example, both the first carrier and the second carrier have channel transmission on the target OFDM symbol, and the method further includes: determining that transmission B and DCI corresponding to transmission A meet a first relationship, where the transmission A is channel transmission of the first carrier on the target OFDM symbol, and the transmission B is channel transmission of the second carrier on the target OFDM symbol.

In a possible example, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In this embodiment of this application, DCI corresponding to the transmission A of the first carrier on the target OFDM symbol and the transmission B of the second carrier on the target OFDM symbol meet the first relationship, to ensure that a terminal device may learn about scheduling information of the transmission A before performing the transmission B, to learn about existence of the transmission A, so that the terminal device may discard the transmission B in time, and avoid a channel conflict.

In a possible example, a method for calculating the first preset duration or the second preset duration is as follows:

$$\mathrm{T}_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

According to a second aspect, a signal transmission method is provided. The method includes: sending scheduling information of at least one of a first carrier and a second carrier on a target orthogonal frequency division multiplexing OFDM symbol, where communication directions of the first carrier and the second carrier on the target OFDM symbol are opposite, and the communication directions include uplink and downlink; and performing channel transmission of a target carrier on the target OFDM symbol, where the target carrier is one of carriers that are determined based on the scheduling information, that are of the first carrier and the second carrier, and that have channel transmission on the target OFDM symbol.

In this embodiment of this application, channel transmission is preferentially performed on a target carrier that has a channel transmission requirement and that is of carriers corresponding to the target OFDM symbol. A requirement of performing unidirectional transmission of only one carrier is met, and a time domain resource is preferentially allocated to a carrier that has a transmission requirement currently, and is not used to wait for transmission that has not arrived, thereby improving transmission resource utilization.

In a possible example, the scheduling information is TDD frame structure configuration information of the first carrier and/or the second carrier, or downlink control information DCI of the first carrier and/or the second carrier.

In a possible example, the TDD frame structure configuration information is indicated by a network device by using RRC signaling.

In a possible example, the first carrier and the second carrier are two carriers in one band. Optionally, the band corresponds to one radio frequency filter.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

In a possible example, that the target carrier is one of carriers that are of the first carrier and the second carrier and that have channel transmission includes: If one of the first carrier and the second carrier has channel transmission, and the other carrier does not have channel transmission, the target carrier is the carrier that has channel transmission.

In a possible example, the first carrier has channel transmission on the target OFDM symbol, the target carrier is the first carrier, channel transmission of the first carrier is downlink channel transmission, and the downlink channel transmission includes at least one of the following: a synchronization signal/broadcast channel block SSB, a physical downlink control channel PDCCH, a physical downlink shared channel PDSCH, or a channel state information-reference signal CSI-RS; or the first carrier has channel transmission on the target OFDM symbol, the target carrier is the first carrier, channel transmission of the first carrier is uplink channel transmission, and the uplink channel transmission includes at least one of the following: a physical uplink shared channel PUSCH, a physical uplink control channel PUCCH, a physical random access channel PRACH, or an uplink sounding reference signal SRS.

In a possible example, that the target carrier is one of carriers that are of the first carrier and the second carrier and that have channel transmission includes: If both the first carrier and the second carrier have channel transmission on the target OFDM symbol, the first carrier includes channel transmission scheduled or triggered by using downlink control information DCI, and the second carrier includes channel transmission configured by using system information or RRC signaling, the target carrier is the first carrier.

In this embodiment of this application, when the first carrier has the channel transmission scheduled or triggered by using the DCI on the target OFDM symbol, and the second carrier has the channel transmission configured by using the system information or the RRC signaling on the target OFDM symbol, the channel transmission of the first carrier is performed on the target OFDM symbol, so that a network device may temporarily schedule channel transmission of a terminal device, thereby improving flexibility of channel transmission configuration.

In a possible example, when the channel transmission scheduled or triggered by using the downlink control information DCI is uplink channel transmission, the uplink channel transmission includes at least one of the following: a PUSCH, a PUCCH carrying a hybrid automatic repeat request-acknowledgment HARQ-ACK of a PDSCH that is dynamically scheduled, a PUCCH carrying aperiodic-channel state information A-CSI, an aperiodic SRS, and a PRACH; and when the channel transmission scheduled or triggered by using the downlink control information DCI is downlink channel transmission, the downlink channel transmission includes at least one of the following: a PDSCH and an aperiodic CSI-RS.

In a possible example, when the channel transmission configured by using the system information or the RRC signaling is downlink transmission, the downlink channel transmission includes at least one of the following: a PDCCH, a semi-persistent scheduling SPS PDSCH, a periodic or semi-persistent channel state information-reference signal CSI-RS, and an SSB; and when the channel transmission configured by using the system information or the RRC signaling is uplink transmission, the downlink channel transmission includes one or more of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, and a PRACH.

According to a third aspect, a signal transmission method is provided. The method includes: receiving scheduling information of at least one carrier in a first carrier set on a target OFDM symbol, where the first carrier set includes a first carrier and a second carrier, the first carrier corresponds to a first TDD frame structure configuration, the second carrier corresponds to a second TDD frame structure configuration, communication directions of the first carrier and the second carrier on the target OFDM symbol are opposite, and the communication directions include uplink and downlink; and performing channel transmission of a reference carrier on the target OFDM symbol, where the reference carrier is one of carriers that are determined based on the scheduling information, that are in the first carrier set, and that have channel transmission on the target OFDM symbol.

In this embodiment of this application, the reference carrier is redefined or supplemented, to enable the determined reference carrier to be a carrier that has channel transmission. In this way, when channel transmission is performed on the target OFDM symbol according to a reference carrier priority principle, a time domain resource can be preferentially allocated to a carrier that has a transmission requirement currently, and is not used to wait for transmission that has not arrived, thereby improving transmission resource utilization and reducing a waiting delay.

In a possible example, a TDD frame structure is indicated by a network device by using RRC signaling.

In a possible example, the first carrier and the second carrier are two carriers in one band. Optionally, the band corresponds to one radio frequency filter.

In a possible example, all carriers in the first carrier set are located in one same band.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

In a possible example, that the reference carrier is one of carriers that are in the first carrier set and that have channel transmission on the target OFDM symbol includes: The reference carrier is a carrier that is in the first carrier set, that has channel transmission on the target OFDM symbol, and that has a minimum carrier ID.

In a possible example, that the reference carrier is one of carriers that are in the first carrier set and that have channel transmission on the target OFDM symbol includes: When the first carrier has channel transmission scheduled or triggered by using downlink control information DCI on the target OFDM symbol, and the second carrier has channel transmission configured by using system information or RRC signaling on the target OFDM symbol, the reference carrier is the first carrier.

In a possible example, the first carrier set includes a first carrier subset and a second carrier subset, and that the reference carrier is one of carriers that are in the first carrier set and that have channel transmission on the target OFDM symbol includes: When a carrier in the first carrier subset has the channel transmission scheduled or triggered by using the downlink control information DCI on the target OFDM symbol, and a carrier in the second carrier subset has the channel transmission configured by using the system information or the RRC signaling on the target OFDM symbol, the reference carrier is a carrier that has a minimum carrier ID in the first carrier subset.

In a possible example, before channel transmission of the reference carrier is performed on the target OFDM symbol, the method further includes: determining that transmission B and DCI corresponding to transmission A meet a first relationship, where the transmission A is channel transmission of the first carrier on the target OFDM symbol, and the transmission B is channel transmission of the second carrier on the target OFDM symbol.

In a possible example, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In this embodiment of this application, DCI corresponding to the transmission A of the first carrier on the target OFDM symbol and the transmission B of the second carrier on the target OFDM symbol meet the first relationship, to ensure that a terminal device may learn about scheduling information of the transmission A before performing the transmission B, to learn about existence of the transmission A, so that the terminal device may discard the transmission B in time, and avoid a channel conflict.

In a possible example, a method for calculating the first preset duration or the second preset duration is as follows:

$$\mathrm{T}_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

According to a fourth aspect, a signal transmission method is provided. The method includes: sending scheduling information of at least one carrier in a first carrier set on a target orthogonal frequency division multiplexing OFDM symbol, where the first carrier set includes a first carrier and a second carrier, communication directions of the first carrier and the second carrier on the target OFDM symbol are opposite, and the communication directions include uplink and downlink; and performing channel transmission of a reference carrier on the target OFDM symbol, where the reference carrier is one of carriers that are determined based on the scheduling information, that are in the first carrier set, and that have channel transmission on the target OFDM symbol.

In this embodiment of this application, the reference carrier is redefined or supplemented, to enable the determined reference carrier to be a carrier that has channel transmission. In this way, when channel transmission is performed on the target OFDM symbol according to a reference carrier priority principle, a time domain resource can be preferentially allocated to a carrier that has a transmission requirement currently, and is not used to wait for transmission that has not arrived, thereby improving transmission resource utilization and reducing a waiting delay.

In a possible example, a TDD frame structure is indicated by a network device by using RRC signaling.

In a possible example, the first carrier and the second carrier are two carriers in one band. Optionally, the band corresponds to one radio frequency filter.

In a possible example, all carriers in the first carrier set are located in one same band.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

In a possible example, that the reference carrier is one of carriers that are in the first carrier set and that have channel transmission on the target OFDM symbol includes: The reference carrier is a carrier that is in the first carrier set, that has channel transmission on the target OFDM symbol, and that has a minimum carrier ID.

In a possible example, that the reference carrier is one of carriers that are in the first carrier set and that have channel transmission on the target OFDM symbol includes: When the first carrier has channel transmission scheduled or triggered by using downlink control information DCI on the target OFDM symbol, and the second carrier has channel transmission configured by using system information or RRC signaling on the target OFDM symbol, the reference carrier is the first carrier.

In a possible example, the first carrier set includes a first carrier subset and a second carrier subset, and that the reference carrier is one of carriers that are in the first carrier set and that have channel transmission on the target OFDM symbol includes: When a carrier in the first carrier subset has the channel transmission scheduled or triggered by using the downlink control information DCI on the target OFDM symbol, and a carrier in the second carrier subset has the channel transmission configured by using the system information or the RRC signaling on the target OFDM symbol, the reference carrier is a carrier that has a minimum carrier ID in the first carrier subset.

In a possible example, before channel transmission of the reference carrier is performed on the target OFDM symbol, the method further includes: determining that transmission B and DCI corresponding to transmission A meet a first relationship, where the transmission A is channel transmission of the first carrier on the target OFDM symbol, and the transmission B is channel transmission of the second carrier on the target OFDM symbol.

In a possible example, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In this embodiment of this application, DCI corresponding to the transmission A of the first carrier on the target OFDM symbol and the transmission B of the second carrier on the target OFDM symbol meet the first relationship, to ensure that a terminal device may learn about scheduling information of the transmission A before performing the transmission B, to learn about existence of the transmission A, so that the terminal device may discard the transmission B in time, and avoid a channel conflict.

In a possible example, a method for calculating the first preset duration or the second preset duration is as follows:

$$T_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

According to a fifth aspect, a communication apparatus is provided. The apparatus includes: a transceiver module, configured to receive scheduling information of at least one of a first carrier and a second carrier on a target orthogonal frequency division multiplexing OFDM symbol, where communication directions of the first carrier and the second carrier on the target OFDM symbol are opposite, and the communication directions include uplink and downlink; and the transceiver module, further configured to perform channel transmission of a target carrier on the target OFDM symbol, where the target carrier is one of carriers that are determined based on the scheduling information, that are of the first carrier and the second carrier, and that have channel transmission on the target OFDM symbol.

In a possible example, the scheduling information is TDD frame structure configuration information of the first carrier and/or the second carrier, or downlink control information DCI of the first carrier and/or the second carrier.

In a possible example, the TDD frame structure configuration information is indicated by a network device by using RRC signaling.

In a possible example, the first carrier and the second carrier are two carriers in one band. Optionally, the band corresponds to one radio frequency filter.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

In a possible example, that the target carrier is one of carriers that are of the first carrier and the second carrier and that have channel transmission includes: If one of the first carrier and the second carrier has channel transmission, and the other carrier does not have channel transmission, the target carrier is the carrier that has channel transmission.

In a possible example, the first carrier has channel transmission on the target OFDM symbol, the target carrier is the first carrier, channel transmission of the first carrier is downlink channel transmission, and the downlink channel transmission includes at least one of the following: a synchronization signal/broadcast channel block SSB, a physical downlink control channel PDCCH, a physical downlink shared channel PDSCH, or a channel state information-reference signal CSI-RS; or the first carrier has channel transmission on the target OFDM symbol, the target carrier is the first carrier, channel transmission of the first carrier is uplink channel transmission, and the uplink channel transmission includes at least one of the following: a physical uplink shared channel PUSCH, a physical uplink control channel PUCCH, a physical random access channel PRACH, or an uplink sounding reference signal SRS.

In a possible example, that the target carrier is one of carriers that are of the first carrier and the second carrier and that have channel transmission includes: If both the first carrier and the second carrier have channel transmission on the target OFDM symbol, the first carrier includes channel transmission scheduled or triggered by using downlink control information DCI, and the second carrier includes channel transmission configured by using system information or RRC signaling, the target carrier is the first carrier.

In a possible example, when the channel transmission scheduled or triggered by using the downlink control information DCI is uplink channel transmission, the uplink channel transmission includes at least one of the following: a PUSCH, a PUCCH carrying a hybrid automatic repeat request-acknowledgment HARQ-ACK of a PDSCH that is dynamically scheduled, a PUCCH carrying aperiodic-channel state information A-CSI, an aperiodic SRS, and a PRACH; and when the channel transmission scheduled or triggered by using the downlink control information DCI is downlink channel transmission, the downlink channel transmission includes at least one of the following: a PDSCH and an aperiodic CSI-RS.

In a possible example, when the channel transmission configured by using the system information or the RRC signaling is downlink transmission, the downlink channel transmission includes at least one of the following: a PDCCH, a semi-persistent scheduling SPS PDSCH, a periodic or semi-persistent channel state information-reference signal CSI-RS, and an SSB; and when the channel transmission configured by using the system information or the RRC signaling is uplink transmission, the downlink channel transmission includes one or more of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, and a PRACH.

In a possible example, the apparatus further includes a processing module, configured to determine that transmission Band DCI corresponding to transmission A meet a first relationship, where the transmission A is channel transmission of the first carrier on the target OFDM symbol, and the transmission B is channel transmission of the second carrier on the target OFDM symbol.

In a possible example, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In a possible example, a method for calculating the first preset duration or the second preset duration is as follows:

$$T_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

According to a sixth aspect, a signal transmission apparatus is provided. The apparatus includes: a transceiver module, configured to send scheduling information of at least one of a first carrier and a second carrier on a target orthogonal frequency division multiplexing OFDM symbol, where communication directions of the first carrier and the second carrier on the target OFDM symbol are opposite, and the communication directions include uplink and downlink; and the transceiver module, further configured to perform channel transmission of a target carrier on the target OFDM symbol, where the target carrier is one of carriers that are determined based on the scheduling information, that are of the first carrier and the second carrier, and that have channel transmission on the target OFDM symbol.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

In a possible example, that the target carrier is one of carriers that are of the first carrier and the second carrier and that have channel transmission includes: If one of the first carrier and the second carrier has channel transmission, and the other carrier does not have channel transmission, the target carrier is the carrier that has channel transmission.

In a possible example, the first carrier has channel transmission on the target OFDM symbol, the target carrier is the first carrier, channel transmission of the first carrier is downlink channel transmission, and the downlink channel transmission includes at least one of the following: a synchronization signal/broadcast channel block SSB, a physical downlink control channel PDCCH, a physical downlink shared channel PDSCH, or a channel state information-reference signal CSI-RS; or the first carrier has channel transmission on the target OFDM symbol, the target carrier is the first carrier, channel transmission of the first carrier is uplink channel transmission, and the uplink channel transmission includes at least one of the following: a physical uplink shared channel PUSCH, a physical uplink control channel PUCCH, a physical random access channel PRACH, or an uplink sounding reference signal SRS.

In a possible example, that the target carrier is one of carriers that are of the first carrier and the second carrier and that have channel transmission includes: If both the first carrier and the second carrier have channel transmission on the target OFDM symbol, the first carrier includes channel transmission scheduled or triggered by using downlink control information DCI, and the second carrier includes channel transmission configured by using system information or RRC signaling, the target carrier is the first carrier.

In a possible example, when the channel transmission scheduled or triggered by using the downlink control information DCI is uplink channel transmission, the uplink channel transmission includes at least one of the following: a PUSCH, a PUCCH carrying a hybrid automatic repeat request-acknowledgment HARQ-ACK of a PDSCH that is dynamically scheduled, a PUCCH carrying aperiodic-channel state information A-CSI, an aperiodic SRS, and a PRACH; and when the channel transmission scheduled or triggered by using the downlink control information DCI is downlink channel transmission, the downlink channel transmission includes at least one of the following: a PDSCH and an aperiodic CSI-RS.

In a possible example, when the channel transmission configured by using the system information or the RRC signaling is downlink transmission, the downlink channel transmission includes at least one of the following: a PDCCH, a semi-persistent scheduling SPS PDSCH, a periodic or semi-persistent channel state information-reference signal CSI-RS, and an SSB; and when the channel transmission configured by using the system information or the RRC signaling is uplink transmission, the downlink channel transmission includes one or more of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, and a PRACH.

In a possible example, the apparatus further includes a processing module, configured to determine that transmission Band DCI corresponding to transmission A meet a first relationship, where the transmission A is channel transmission of the first carrier on the target OFDM symbol, and the transmission B is channel transmission of the second carrier on the target OFDM symbol.

In a possible example, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In a possible example, a method for calculating the first preset duration or the second preset duration is as follows:

$$\mathrm{T}_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

According to a seventh aspect, a signal transmission apparatus is provided. The apparatus includes: a transceiver module, configured to receive scheduling information of at least one carrier in a first carrier set on a target OFDM symbol, where the first carrier set includes a first carrier and a second carrier, communication directions of the first carrier and the second carrier on the target OFDM symbol are opposite, and the communication directions include uplink and downlink; and the transceiver module, further configured to perform channel transmission of a reference carrier on the target OFDM symbol, where the reference carrier is one of carriers that are determined based on the scheduling information, that are in the first carrier set, and that have channel transmission on the target OFDM symbol.

In a possible example, a TDD frame structure is indicated by a network device by using RRC signaling.

In a possible example, the first carrier and the second carrier are two carriers in one band. Optionally, the band corresponds to one radio frequency filter.

In a possible example, all carriers in the first carrier set are located in one same band.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

In a possible example, that the reference carrier is one of carriers that are in the first carrier set and that have channel transmission on the target OFDM symbol includes: The reference carrier is a carrier that is in the first carrier set, that has channel transmission on the target OFDM symbol, and that has a minimum carrier ID.

In a possible example, that the reference carrier is one of carriers that are in the first carrier set and that have channel transmission on the target OFDM symbol includes: When the first carrier has channel transmission scheduled or triggered by using downlink control information DCI on the target OFDM symbol, and the second carrier has channel transmission configured by using system information or RRC signaling on the target OFDM symbol, the reference carrier is the first carrier.

In a possible example, the first carrier set includes a first carrier subset and a second carrier subset, and that the reference carrier is one of carriers that are in the first carrier set and that have channel transmission on the target OFDM symbol includes: When a carrier in the first carrier subset has the channel transmission scheduled or triggered by using the downlink control information DCI on the target OFDM symbol, and a carrier in the second carrier subset has the channel transmission configured by using the system information or the RRC signaling on the target OFDM symbol, the reference carrier is a carrier that has a minimum carrier ID in the first carrier subset.

In a possible example, the apparatus further includes a processing module, configured to determine that transmission Band DCI corresponding to transmission A meet a first relationship, where the transmission A is channel transmission of the first carrier on the target OFDM symbol, and the transmission B is channel transmission of the second carrier on the target OFDM symbol.

In a possible example, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In a possible example, a method for calculating the first preset duration or the second preset duration is as follows:

$$\mathrm{T}_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

According to an eighth aspect, a signal transmission apparatus is provided. The apparatus includes: a transceiver module, configured to send scheduling information of at least one carrier in a first carrier set on a target orthogonal frequency division multiplexing OFDM symbol, where the first carrier set includes a first carrier and a second carrier, communication directions of the first carrier and the second carrier on the target OFDM symbol are opposite, and the communication directions include uplink and downlink; and the transceiver module, further configured to perform channel transmission of a reference carrier on the target OFDM symbol, where the reference carrier is one of carriers that are determined based on the scheduling information, that are in the first carrier set, and that have channel transmission on the target OFDM symbol.

In a possible example, a TDD frame structure is indicated by a network device by using RRC signaling.

In a possible example, the first carrier and the second carrier are two carriers in one band. Optionally, the band corresponds to one radio frequency filter.

In a possible example, all carriers in the first carrier set are located in one same band.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

In a possible example, that the reference carrier is one of carriers that are in the first carrier set and that have channel transmission on the target OFDM symbol includes: The reference carrier is a carrier that is in the first carrier set, that has channel transmission on the target OFDM symbol, and that has a minimum carrier ID.

In a possible example, that the reference carrier is one of carriers that are in the first carrier set and that have channel transmission on the target OFDM symbol includes: When the first carrier has channel transmission scheduled or triggered by using downlink control information DCI on the target OFDM symbol, and the second carrier has channel transmission configured by using system information or RRC signaling on the target OFDM symbol, the reference carrier is the first carrier.

In a possible example, the first carrier set includes a first carrier subset and a second carrier subset, and that the reference carrier is one of carriers that are in the first carrier set and that have channel transmission on the target OFDM symbol includes: When a carrier in the first carrier subset has the channel transmission scheduled or triggered by using the downlink control information DCI on the target OFDM symbol, and a carrier in the second carrier subset has the channel transmission configured by using the system information or the RRC signaling on the target OFDM symbol, the reference carrier is a carrier that has a minimum carrier ID in the first carrier subset.

In a possible example, the apparatus further includes a processing module, configured to determine that transmission Band DCI corresponding to transmission A meet a first relationship, where the transmission A is channel transmission of the first carrier on the target OFDM symbol, and the transmission B is channel transmission of the second carrier on the target OFDM symbol.

In a possible example, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In a possible example, a method for calculating the first preset duration or the second preset duration is as follows:

$$T_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

According to a ninth aspect, an embodiment of this application provides a communication apparatus. The apparatus includes a communication interface and at least one processor. The communication interface is used by the apparatus to communicate with another device, for example, receive scheduling information of at least one of a first carrier and a second carrier on a target orthogonal frequency division multiplexing OFDM symbol. For example, the communication interface may be a transceiver, a circuit, a bus, a module, or another type of communication interface, and the another device may be a network device. The at least one processor is configured to invoke a group of programs, instructions, or data to perform the method described in the first aspect or the second aspect. The apparatus may further include a memory, configured to store the program, the instructions, or the data invoked by the processor. The memory is coupled to at least one processor. When executing the instructions or data stored in the memory, the at least one processor may implement the method described in the first aspect or the second aspect.

According to a tenth aspect, an embodiment of this application further provides a communication apparatus. The communication apparatus includes a communication interface and at least one processor. The communication interface is used by the apparatus to communicate with another device, for example, receive scheduling information of at least one carrier in a first carrier set on a target OFDM symbol. For example, the communication interface may be a transceiver, a circuit, a bus, a module, or another type of communication interface, and the another device may be a terminal device. The at least one processor is configured to invoke a group of programs, instructions, or data to perform the method described in the third aspect or the fourth aspect. The apparatus may further include a memory, configured to store the program, the instructions, or the data invoked by the processor. The memory is coupled to at least one processor. When executing the instructions or data stored in the memory, the at least one processor may implement the method described in the third aspect or the fourth aspect.

According to an eleventh aspect, an embodiment of this application further provides a computer-readable storage medium. The computer-readable storage medium stores instructions. When the instructions are run on a computer, the computer is enabled to perform the method according to the first aspect or according to any one of the possible implementations of the first aspect, the computer is enabled to perform the method according to the second aspect or according to any one of the possible implementations of the second aspect, the computer is enabled to perform the method according to the third aspect or according to any one of the possible implementations of the third aspect, or the computer is enabled to perform the method according to the fourth aspect or according to any one of the possible implementations of the fourth aspect.

According to a twelfth aspect, an embodiment of this application provides a chip system. The chip system includes a processor, may further include a memory, and is configured to implement the method according to the first aspect or according to any one of the possible implementations of the first aspect, is configured to implement the method according to the second aspect or according to any one of the possible implementations of the second aspect, is configured to implement the method according to the third aspect or according to any one of the possible implementations of the third aspect, or is configured to implement the method according to the fourth aspect or according to any one of the possible implementations of the fourth aspect. The chip system may include a chip, or may include a chip and another discrete component.

In a possible example, the chip system further includes a transceiver.

According to a thirteenth aspect, an embodiment of this application further provides a computer program product, including instructions. When the computer program product is run on a computer, the computer is enabled to perform the method according to the first aspect or according to any one of the possible implementations of the first aspect, the computer is enabled to perform the method according to the second aspect or according to any one of the possible implementations of the second aspect, the computer is enabled to perform the method according to the third aspect or according to any one of the possible implementations of the third aspect, or the computer is enabled to perform the method according to the fourth aspect or according to any one of the possible implementations of the fourth aspect.

According to a fourteenth aspect, an embodiment of this application further provides a communication system. The communication system may include the signal transmission apparatuses provided in the fifth aspect and the sixth aspect, or the communication system may include the communication transmission apparatuses provided in the seventh aspect and the eighth aspect.

**BRIEF DESCRIPTION OF DRAWINGS**

To describe technical solutions of embodiments of this application more clearly, the following briefly describes the accompanying drawings for describing embodiments.

FIG. 1 is a schematic diagram of a structure of a communication system according to an embodiment of this application;

FIG. 2 is a schematic diagram of an information exchange process in a communication system according to an embodiment of this application;

FIG. 3 is a schematic diagram of a self-contained frame structure according to an embodiment of this application;

FIG. 4 is a schematic diagram of a complementary frame structure according to an embodiment of this application;

FIG. 5 is a flowchart of a signal transmission method according to an embodiment of this application;

FIG. 6 is a schematic diagram of a communication direction on a target OFDM symbol according to an embodiment of this application;

FIG. 7 is a schematic diagram of a first relationship between transmission A and transmission B according to an embodiment of this application;

FIG. 8 is a schematic diagram of another first relationship between transmission A and transmission B according to an embodiment of this application;

FIG. 9 is a flowchart of a signal transmission method according to an embodiment of this application;

FIG. 10 is a block diagram of a structure of a communication apparatus according to an embodiment of this application;

FIG. 11 is a block diagram of a structure of a communication apparatus according to an embodiment of this application; and

FIG. 12 is a schematic diagram of a structure of an electronic apparatus according to an embodiment of this application.

## DESCRIPTION OF EMBODIMENTS

In this specification, claims, and accompanying drawings of this application, the terms "first", "second", "third", "fourth", and the like are used to distinguish between different objects, and are not used to describe a particular order. In addition, the terms "including" and "having" and any other variants thereof are intended to cover a non-exclusive inclusion. For example, a process, a method, a system, a product, or a device that includes a series of steps or modules is not limited to the listed steps or modules, but optionally further includes an unlisted step or module, or optionally further includes another inherent step or module of the process, the method, the product, or the device.

An "embodiment" mentioned in this specification means that a particular characteristic, structure, or feature described with reference to embodiments may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

The term "a plurality of" means two or more than two. The term "and/or" describes an association relationship between associated objects and indicates that three relationships may exist. For example, A and/or B may indicate the following three cases: Only A exists, both A and B exist, and only B exists. A character "/" generally indicates an "or" relationship between the associated obj ects.

Application scenarios in embodiments of this application are described first.

Embodiments of this application may be applicable to a long term evolution (long term evolution, LTE) system and an internet of things (internet of things, IoT) system, or may be applicable to another wireless communication system, for example, a global system for mobile communication (global system for mobile communication, GSM), a universal mobile telecommunications system (universal mobile telecommunications system, UMTS), a code division multiple access (code division multiple access, CDMA) system, and a new radio (new radio, NR) system.

Embodiments of the present invention relate to a terminal device. The terminal device may also be referred to as a terminal, user equipment (user equipment, UE), a mobile station, a mobile terminal, and the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self driving, remote medical, a smart grid, smart furniture, smart office, smart wear, smart transportation, a smart city, and the like. The terminal may be a mobile phone, a tablet computer, a computer with a wireless transceiver function, a wearable device, a vehicle, an unmanned aerial vehicle, a helicopter, a plane, a ship, a robot, a mechanical arm, a smart home device, and the like. A specific technology and a specific device form that are used by the terminal are not limited in the embodiments of this application. Embodiments of the present invention relate to a network device. The network device may also be referred to as a radio access network device. The network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like, or may be a module or a unit that performs some functions of a base station, for example, may be a central unit (central unit, CU) or a distributed unit (distributed unit, DU). The CU herein performs functions of a radio resource control protocol and a packet data convergence protocol (packet data convergence protocol, PDCP) of the base station, and may further perform functions of a service data adaptation protocol (service data adaptation protocol, SDAP). The DU performs functions of a radio link control layer and a medium access control (medium access control, MAC) layer of the base station, and may further perform some or all functions of a physical layer. For specific descriptions of the foregoing protocol layers refer to relevant technical specifications of a 3rd generation partnership project (3rd generation partnership project, 3GPP). The radio access network device may be a macro base station, a micro base station, an indoor station, a relay node, a donor node, or the like. A specific technology and a specific device form that are used by the radio access network device are not limited in embodiments of this application.

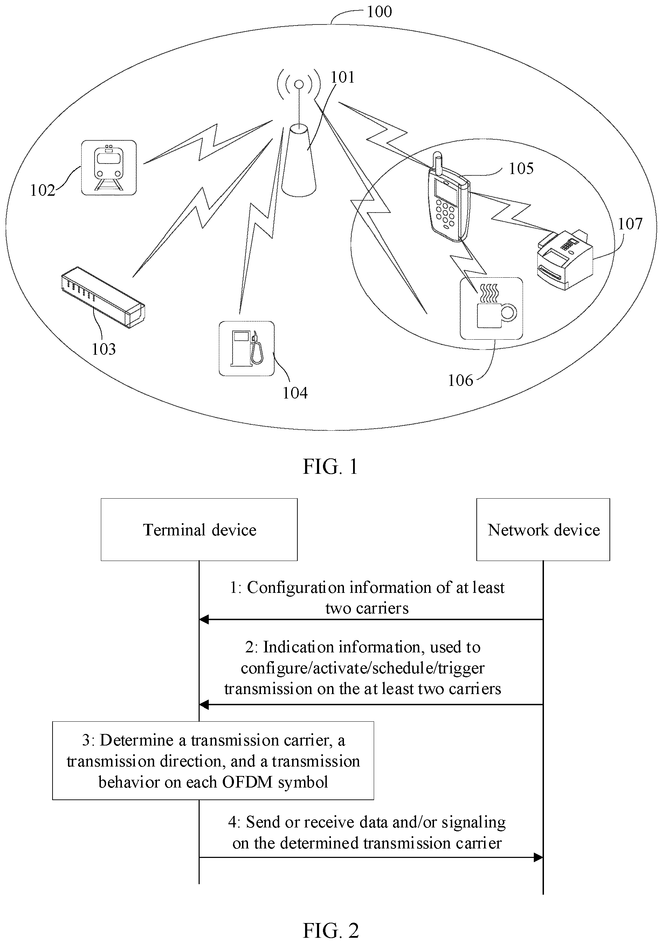

For system structures of the terminal device and the network device, refer to FIG. 1. FIG. 1 is a schematic diagram of a structure of a communication system according to an embodiment of this application. As shown in FIG. 1, the system includes one network device 101 and six terminal devices. The six terminal devices are a terminal device 102, a terminal device 103, a terminal device 104, a terminal device 105, a terminal device 106, a terminal device 107, and the like. In the example shown in FIG. 1, the terminal device 102 is a vehicle, the terminal device 103 is a smart air conditioner, the terminal device 104 is a smart fuel dispenser, the terminal device 105 is a mobile phone, the terminal device 106 is a smart tea cup, and the terminal device 107 is a printer.

Further, the network device and the terminal devices in the system may perform information exchange shown in FIG. 2. FIG. 2 is a schematic diagram of an information exchange process in a communication system according to an embodiment of this application. The network device sends configuration information of at least two carriers to the terminal device. The network device sends indication information to the terminal device, to configure periodic configuration transmission on one or more of the at least two carriers, to activate semi-persistent transmission, or to schedule/trigger dynamic transmission. For each orthogonal frequency division multiplexing (orthogonal frequency division multiplexing, OFDM) symbol, the terminal device determines a transmission carrier, a transmission direction, and a transmission behavior from the at least two carriers, where the transmission behavior is sending or receiving corresponding transmission on these carriers. The terminal device performs, based on a determined result, corresponding sending or receiving on the selected carrier.

The following describes professional terms in embodiments of this application.

In an NR technology, spectrum usage is classified into a plurality of levels. The top layer is a band (band), and the following is sequentially a component carrier (component carrier, CC), a bandwidth part (bandwidth part, BWP), a subband (subband, SB), a resource block (resource block, RB), and a subcarrier (subcarrier, SC). Details are described as follows:

Band (band): The band is a regulation uniformly formulated by the International Telecommunication Union (International Telecommunication Union, ITU) for a frequency range. Generally, the band is named nxx. For example, a band n78 corresponds to a total band of 500 MHz from 3.3 G to 3.8 G, and it is specified that the band can only be of a TDD standard.

Component carrier CC: The CC is a basic unit of a frequency band deployed by an operator. Generally, one frequency band includes a plurality of CCs, and one CC corresponds to a spectrum position in frequency domain. The spectrum position includes a start position and a bandwidth, for example, the bandwidth is 100 MHz, 80 MHz, 40 MHz, 20 MHz, 10 MHz, 5 MHz, or the like, and two sides generally include a guard band (guard Band). It should be noted that currently, in LTE and NR, a frame structure is configured in a unit of a CC. In other words, a TDD frame structure in one CC is fixed without considering a dynamic TDD frame structure, and TDD frame structures of different CCs may be different.

Bandwidth part BWP: A part of total bandwidth of a cell is referred to as a BWP. To be specific, one CC includes a plurality of BWPs, and the BWP corresponds to a spectrum position on the CC in frequency domain. A start position of the BWP is relative to the start position of the CC, and the bandwidth generally represents a quantity of resource blocks (resource blocks, RBs). One BWP has one subcarrier spacing (subcarrier spacing, SCS). In other words, an SCS is configured in a unit of a BWP.

Subband (subband): One BWP includes a plurality of RBs, and generally exceeds a width of a coherence bandwidth of a channel. Therefore, a concept of one subband is generally introduced during real data scheduling, transmission, and channel measurement. One subband includes one or more RBs. For example, during channel measurement, it is usually assumed that channels on one subband are the same, and during scheduling, it may also be assumed that precoding matrices on one subband are the same.

Resource block RB and subcarrier SC: One RB includes 12 consecutive subcarriers SCs. One SC is a smallest frequency domain unit in LTE and NR systems and may carry one modulation symbol.

In addition, in an NR protocol, one cell (Cell) is associated with one downlink carrier and one uplink carrier.

However, for a TDD system, the downlink carrier and the uplink carrier share one TDD frame structure configuration. Therefore, in the following description, a carrier and a cell may be mutually used without ambiguity.

Embodiments of this application relate to a TDD frame structure configuration. The following describes a frame structure configuration method in NR

NR time-domain structure: A unit of a time-domain transmission resource in the NR is a frame (Frame), a subframe (subframe), a slot (slot), and an OFDM symbol (symbol). A length of the frame is fixed at 10 ms (millisecond), and a length of the subframe is fixed at 1 ms. A length of the slot and a length of the symbol are related to a subcarrier spacing. One slot includes 14 symbols (a normal cyclic prefix) or 12 symbols (an extended cyclic prefix). Assuming that the subcarrier spacing is SCS = $2^\mu \times$ 15 kHz, one subframe (subframe) includes $2^\mu$ slots (Slot), where $\mu$ is an SCS index (index), and a value of $\mu$ is 0, 1, 2, and 3.

TDD frame structure: A basis of the TDD frame structure in the NR is a transmission direction, and a minimum determining unit is an OFDM symbol. For a TDD frequency band, a transmission direction on a symbol may be downlink (marked as D or DL), uplink (marked as U or UL), or flexible (marked as F) (which may also be referred to as special and marked as S). A flexible symbol indicates that downlink transmission or uplink transmission may be performed on the symbol, or the symbol may be used for uplink-downlink switching. Specifically, a frame structure is generally represented in a unit of a slot/symbol. For example, $a$D:$b$F:$c$U represents that a TDD uplink-downlink switching period is $a+b+c$ slots, the first $a$ slots are downlink slots, the middle $b$ slots are flexible slots, and the last c slots are uplink slots. For a flexible slot, the flexible slot may be represented as $x$D$y$F:$z$U, representing that in the slot, the first x symbols are downlink symbols, the middle y symbols are flexible symbols, and the last z symbols are uplink symbols.

Cell-level TDD frame structure configuration: The cell-level TDD frame structure configuration may be indicated by using higher-layer signaling *tdd-UL-DL-ConfigurationCommon*. The signaling is carried in a system message or cell-specific configuration information, and includes one subcarrier spacing SCS and one pattern (Pattern). The pattern indicates a period, a quantity of uplink slots, a quantity of downlink slots, a quantity of flexible slots, and the like.

UE-level TDD frame structure configuration: The UE-level TDD frame structure configuration is indicated by using higher-layer signaling *tdd-UL-DL-ConfigurationDedicated*, and the signaling is a supplement to a frame structure indicated by the *tdd-UL-DL-ConfigurationCommon*. Assuming that a period of the frame structure indicated by the *tdd-UL-DL-ConfigurationCommon* includes N slots, the *tdd-UL-DL-ConfigurationDedicated* includes a group of *TDD-UL-DL-SlotConfig*, and each *TDD-UL-DL-SlotConfig* is used to configure a frame structure of one of the N slots, and may indicate that a symbol in a slot is an uplink symbol or a downlink symbol. It should be noted that the *tdd-UL-DL-ConfigurationDedicated* can only rewrite an attribute that is indicated as a flexible symbol in the *tdd-UL-DL-ConfigurationCommon*.

DCI dynamic indication TDD frame structure: UE may be configured to detect one DCI format (format). The DCI format may indicate a TDD frame structure on one group of CCs, for example, a DCI format 2_0, including indicating information such as a slot format combination on each CC in the group of CCs, a reference subcarrier spacing index $\mu_{ref}$, and a bit position of each CC in DCI. A frame structure in each slot corresponds to one slot format indicator (slot format indicator, SFI) value. The SFI has a plurality of values, and each value corresponds to a frame structure.

The cell-level TDD frame structure configuration and the UE-level TDD frame structure configuration are indicated by using a higher-layer parameter, for example, RRC signaling, and are semi-persistently configured. The RRC signaling includes system information during initial access and RRC signaling after access.

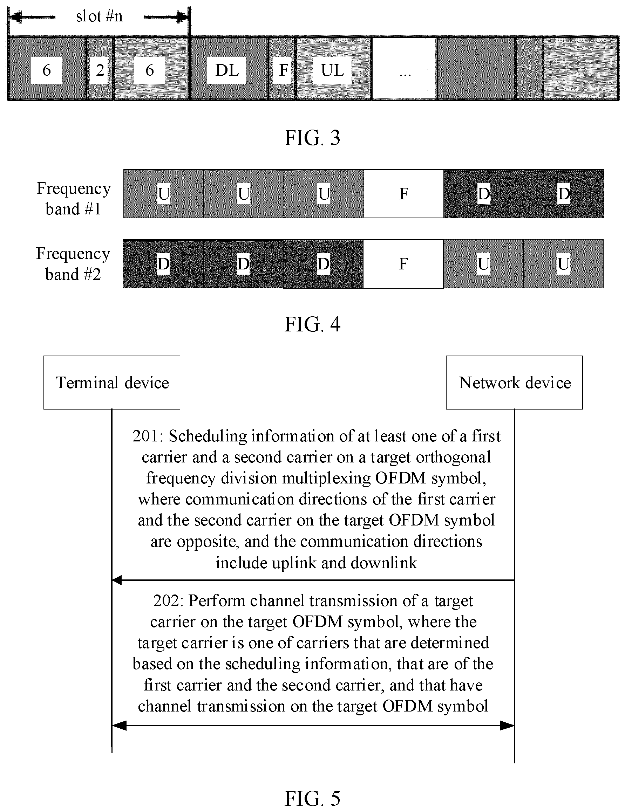

It can be learned from the foregoing description that, in a communication process of a network device and a terminal device, a TDD frame structure frequency band has a problem of an excessively long waiting delay. A self-contained frame structure introduced in 5G NR may be represented as nD:mF:rU, which means that one slot includes n downlink (downlink, D) OFDM symbols, m flexible (flexible, F) symbols, and r uplink (uplink, U) symbols. FIG. 3 is a schematic diagram of a self-contained frame structure according to an embodiment of this application. An example in which n=6, m=2, and r=6 is used for description. One self-contained slot (Slot) #n includes six downlink OFDM symbols, two flexible OFDM symbols, and six uplink OFDM symbols. Obviously, the self-contained frame structure has a very small uplink-downlink switching period, which may not result in an excessively long waiting delay. However, this frame structure has large complexity, including introducing very small scheduling granularity and a very high scheduling specification. In addition, very large overheads for uplink-downlink switching are introduced. Finally, DMRS overheads for data transmission are very large due to small transmission granularity.

To resolve this problem, a complementary frame structure is provided. FIG. 4 is a schematic diagram of a complementary frame structure according to an embodiment of this application. As shown in FIG. 4, a core of the solution is to introduce another frequency band whose frame structure is nU:mF:rD based on an existing frequency band whose frame structure is nD:mF:rU, to form complementation. In this way, a downlink resource and an uplink resource are available at any time. Dynamic selection of frequency bands may ensure that no extra waiting delay exists. In addition, because each frequency band is of a TDD frame structure, a downlink transmission channel may be estimated by using an uplink reference signal, thereby improving spectrum efficiency.

The frame structure configuration may be applied to a carrier aggregation (carrier aggregation, CA) scenario, to be specific, in the CA scenario, two carriers CCs are supported to be configured into different or even complementary frame structures. However, in the CA scenario, UE needs to support transmission on two CCs, to be specific, the UE has two sets of transceiver links and processing units, which separately correspond to the two CCs. However, a purpose of introducing the complementary TDD frame structure is to support a lower latency. The UE only needs to switch between two frequency bands to ensure a low latency, and the two sets of transceiver links and processing units are not required. In addition, the two sets of transceiver links and processing units may cause a waste of processor components and resources.

Based on this, a terminal needs to support transmission on a plurality of CCs on one set of transceiver links and processing units. However, when the two frequency bands with different frame structures are located in one band, a terminal device usually does not have a capability of simultaneously receiving downlink data and sending uplink data. Therefore, sending and receiving behaviors of the terminal device need to be specified, to support more flexible frequency band switching and transmission selection, and better support low-latency features of services such as URLLC in a 5G communication system.

FIG. 5 is a flowchart of a signal transmission method according to an embodiment of this application. As shown in FIG. 5, the method includes the following steps:

201: A network device sends scheduling information of at least one of a first carrier and a second carrier on a target orthogonal frequency division multiplexing OFDM symbol. Correspondingly, a terminal device receives the scheduling information of the at least one of the first carrier and the second carrier on the target orthogonal frequency division multiplexing OFDM symbol.

Specifically, communication directions of the first carrier and the second carrier on the target OFDM symbol are opposite, and the communication directions include uplink and downlink.

In this embodiment of this application, the first carrier and the second carrier represent two different frequency domain resources. To be specific, the first carrier corresponds to a first frequency domain resource, and the second carrier corresponds to a second frequency domain resource. The two carriers may belong to one same band, or may belong to different bands. Optionally, the first frequency domain resource and the second frequency domain resource are two BWPs and belong to one same carrier. Optionally, the first frequency domain resource and the second frequency domain resource are two subbands and belong to one same BWP. In this embodiment of this application, an example in which the first frequency domain resource and the second frequency domain resource are two carriers is used for description. To be specific, the first frequency domain resource is the first carrier, and the second frequency domain resource is the second carrier. It may be inferred that the first frequency domain resource and the second frequency domain resource may also be described by using other frequency domain resources such as a first BWP and a second BWP, or a first subband and a second subband. This is not limited in this embodiment of this application.

Optionally, a TDD frame structure is a TDD frame structure that is semi-persistently configured. Optionally, a TDD frame structure is a frame structure that is semi-persistently and dynamically indicated.

The first carrier and the second carrier are carriers on which the network device and the terminal device can communicate with each other. Scheduling information of the first carrier and the second carrier is information used to allocate communication resources on the first carrier and the second carrier. In this embodiment of this application, the scheduling information may include system information or an RRC signaling configuration (the TDD frame structure that is semi-persistently configured) used to configure the frame structures of the first carrier and the second carrier, dynamic signaling (the TDD frame structure that is semi-persistently and dynamically indicated) indicating the frame structures of the first carrier and the second carrier, or dynamic indication signaling or higher-layer configuration signaling of transmission A on the first carrier and/or transmission B on the second carrier. The terminal device may send uplink data and/or signaling to the network device based on the configured frame structure, or the network device may send downlink data and/or signaling to the terminal device based on the configured frame structure. Alternatively, the scheduling information may further include DCI dynamically sent by the network device, for example, a DCI format 2_0. The terminal device dynamically modifies a slot format on the first carrier or the second carrier based on detected DCI. If transmission on the first carrier or the second carrier is scheduled or triggered by using the dynamic indication signaling, the transmission is referred to as transmission that is dynamically scheduled or triggered, for example, transmission scheduled or triggered by using DCI. If transmission on the first carrier or the second carrier is transmission configured by using the higher-layer configuration signaling, the transmission is referred to as semi-persistent scheduling transmission or configuration transmission.

The communication directions of the first carrier and the second carrier on the target OFDM symbol may be determined based on the scheduling information. When the scheduling information is TDD frame structure configurations of the first carrier and the second carrier, the first carrier corresponds to a first TDD frame structure configuration, and the second carrier corresponds to a second TDD frame structure configuration. The TDD frame structure configuration indicates that a corresponding carrier is transmitted in a time division multiplexing manner in specific frequency domain. In addition, the frame structure configuration may further include information such as an SCS, a period, and a pattern of the carrier as described above. The pattern of the carrier further includes that the carrier is an uplink symbol or a downlink symbol on the OFDM symbol, and indicates a communication direction of the carrier.

Alternatively, when the scheduling information includes DCI that is dynamically sent, the communication direction of the first carrier and/or the second carrier may be further indicated based on the TDD frame structure configuration according to channel transmission indicated by the DCI. For example, when a flexible symbol is used on the OFDM symbol, a communication direction on the flexible symbol is the same as a direction of the channel transmission indicated by the DCI.

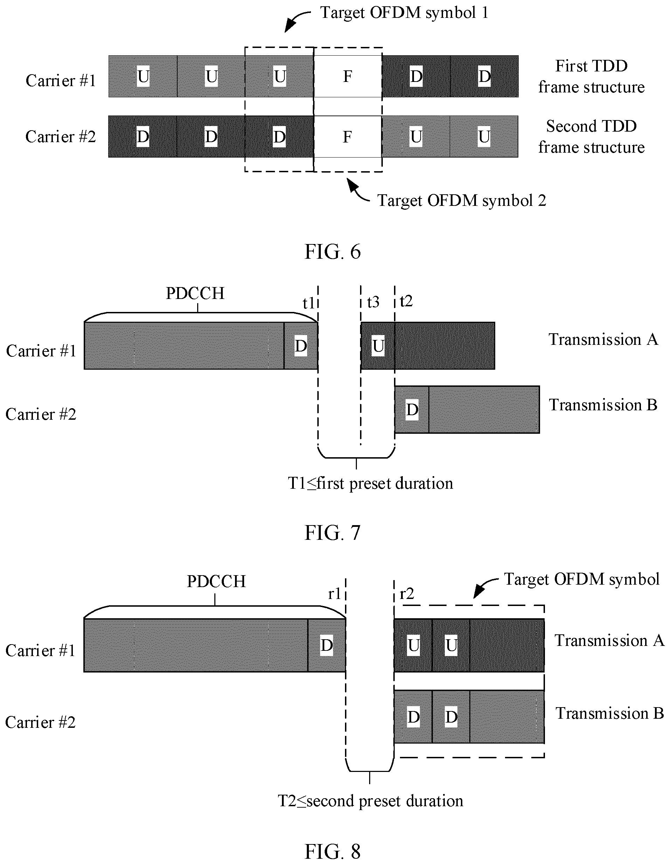

That the communication directions of the first carrier and the second carrier on the target OFDM symbol are opposite includes two meanings. Specifically, FIG. 6 is a schematic diagram of a communication direction on a target OFDM symbol according to an embodiment of this application. A first meaning is that: a first TDD frame structure configuration on the target OFDM symbol is an uplink symbol, and a second TDD frame structure configuration on the target OFDM symbol is a downlink symbol. For example, for a target OFDM symbol 1, a communication direction of the first TDD frame structure configuration of the first carrier (a carrier #1) is uplink (U), and a communication direction of the second TDD frame structure configuration of the second carrier (a carrier #2) is downlink (D). Communication directions of the first carrier and the second carrier are opposite. Alternatively, the second meaning may be: A first TDD frame structure configuration on the target OFDM symbol is a flexible symbol, and a second TDD frame structure configuration on the target OFDM symbol is also a flexible symbol, but actual channel transmission directions of two carriers on the target OFDM symbol are opposite. For example, for a target OFDM symbol 2, communication directions of the first TDD frame structure configuration and the second TDD frame structure configuration are flexible (F). However, during actual channel transmission, the first carrier has uplink channel transmission on the target OFDM symbol 2, and the second carrier has downlink channel transmission on the target OFDM symbol 2. Therefore, communication directions of the first TDD frame structure configuration and the second TDD frame structure configuration are also opposite on the target OFDM symbol 2. Similarly, the first TDD frame structure configuration on the target OFDM symbol may an uplink symbol, and the second TDD frame structure configuration may be a flexible symbol, but the second carrier has downlink channel transmission on the target OFDM symbol; or the first TDD frame structure configuration on the target OFDM symbol may be a flexible symbol, the second carrier has uplink channel transmission on the target OFDM symbol, and the second TDD frame structure configuration may be a downlink symbol.

The target OFDM symbol may be one OFDM symbol, or a plurality of OFDM symbols. As shown in FIG. 6, the target OFDM symbol may be six time domain symbols corresponding to two carriers in the figure. To be specific, when scheduling information of at least one of the first carrier and the second carrier on the six time domain symbols is received, determining of channel transmission on the six time domain symbols is triggered. Alternatively, the target OFDM symbol may be the first symbol in the six time domain symbols shown in FIG. 6. To be specific, when it is determined that a transmission direction conflict occurs on one OFDM symbol, determining of channel transmission on the target OFDM symbol is triggered, and transmission of the first OFDM symbol may continue to be performed on the remaining five OFDM symbols until one complete scheduling transmission is completed.

In a possible case, the first carrier and the second carrier are carriers with a same SCS. In this way, it may be ensured that duration of OFDM symbols in slots of the first carrier and the second carrier are the same. Therefore, it may further be ensured that transmission directions of the first carrier and the second carrier on one same target OFDM symbol can be opposite.

202: The network device performs channel transmission of a target carrier on the target OFDM symbol. Correspondingly, the terminal device performs the channel transmission of the target carrier on the target OFDM symbol.

Specifically, the target carrier is one of carriers that are determined based on the scheduling information, that are of the first carrier and the second carrier, and that have channel transmission on the target OFDM symbol.

The following describes in detail a manner of determining the target carrier based on the scheduling information.

Manner 1: One of the first carrier and the second carrier has channel transmission, the other carrier does not have channel transmission, and the target carrier is the carrier that has channel transmission.

Assuming that in the first carrier and the second carrier, the first carrier has channel transmission on the target OFDM symbol, and the second carrier does not have channel transmission on the target OFDM symbol. In this case, the first carrier is determined as the target carrier.

The channel transmission on the first carrier may be downlink channel transmission, and the downlink channel transmission includes at least one of the following: a synchronization signal/physical broadcast channel block (synchronization signal/physical broadcast channel block, SS/PBCH Block, SSB), a physical downlink control channel (physical downlink control channel, PDCCH), a physical downlink shared channel (physical downlink shared channel, PDSCH), a channel state information-reference signal (channel state information-reference signal, CSI-RS), or the like.

Alternatively, the channel transmission on the first carrier may be uplink channel transmission, and the uplink channel transmission includes at least one of the following: a physical uplink shared channel (physical uplink shared channel, PUSCH), a physical uplink control channel (physical uplink control channel, PUCCH), a physical random access channel (physical random access channel, PRACH), an uplink sounding reference signal (sounding reference signal, SRS), or the like.

Manner 2: Both the first carrier and the second carrier have channel transmission on the target OFDM symbol, the first carrier includes channel transmission scheduled or triggered by using downlink control information DCI, the second carrier includes channel transmission configured by using system information or RRC signaling, and the target carrier is the first carrier.

Channel transmission scheduled or triggered by using DCI may also be referred to as dynamic scheduled transmission. As described above, the network device dynamically sends DCI, for example, a DCI format 2_0. The terminal device detects the DCI, and dynamically modifies a slot format on a carrier based on the DCI, for example, a time domain symbol in a slot is modified from F to U, indicating that the terminal device performs uplink channel transmission on a symbol whose frame structure configuration is flexible transmission. Alternatively, for example, a DCI format 0_1. The terminal device detects the DCI, and determines, based on the DCI, that the PUSCH transmission needs to be performed on the target symbol on the target symbol. Generally, the channel transmission scheduled or triggered by using the DCI is single transmission. To be specific, each DCI scheduling corresponds to one channel transmission.

Channel transmission configured by using system information or radio resource control (radio resource control, RRC) signaling may be, for example, an SSB or a PRACH configured by using the system information or the RRC signaling, or other channel transmission. The system information may be transmitted by using a master system information block (Master Information Block, MIB) and a system information block 1 (System Information Block 1, SIB 1). In the foregoing described TDD frame structure configured by using the *tdd-UL-DL-ConfigurationCommon* or the *tdd-UL-DL-ConfigurationDedicated*, the indicated downlink symbol, uplink symbol, or flexible symbol may be respectively represented as Semi-D, Semi-U, and Semi-F. However, in the Semi-F symbol, downlink transmission or uplink transmission may be further configured by using RRC signaling, and a corresponding symbol is RRC-D or RRC-U. Generally, the channel transmission configured by using the system information or the RRC signaling is a plurality of times of transmission. To be specific, each system information configuration or RRC signaling configuration may be used for a plurality of times of channel transmission with a same configuration parameter. For another example, in a connected-mode period, the network device configures one grant-free PUSCH transmission for the terminal device by using the RRC signaling, to indicate to send a PUSCH at a corresponding time-frequency position in each period. The grant-free PUSCH is one configuration transmission. Generally, the channel transmission configured by using the system information or the RRC signaling is periodic transmission.

The channel transmission scheduled or triggered by using the DCI on the first carrier may be uplink channel transmission, and may specifically include at least one of the following: a PUSCH scheduled by the DCI, a PUCCH carrying a hybrid automatic repeat request-acknowledgement (hybrid automatic repeat request-acknowledgement, HARQ-ACK) of a PDSCH that is dynamically scheduled, a PUCCH carrying aperiodic-channel state information (aperiodic-channel state report, A-CSI), an aperiodic sounding reference signal (sounding reference signal, SRS), a PRACH, or the like. In this case, there is downlink channel transmission (opposite to the communication direction of the first carrier) configured by using the RRC signaling on the second carrier, and may be specifically a PDSCH, a CSI-RS, or the like configured by using the RRC signaling.

The channel transmission scheduled or triggered by using the DCI on the first carrier may be downlink channel transmission, and the downlink channel transmission includes at least one of the following: a PDSCH, a CSI-RS, or the like. In this case, there is uplink channel transmission (opposite to the communication direction of the first carrier) configured by using the system information or the RRC signaling on the second carrier, and may be specifically at least one of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, a PRACH, or the like.

Because channel transmission configured by using higher-layer signaling (the system information or the RRC signaling) is preconfigured channel transmission, and channel transmission dynamically scheduled by using DCI may be temporarily generated channel transmission for some special requirements or temporary transactions, the latter may have a higher priority. When the channel transmission configured by using the higher-layer signaling is in the second carrier and the channel transmission dynamically scheduled by using the DCI is in the first carrier, the first carrier is the target carrier.

In other words, the foregoing transmission process may be described as follows: The network device does not perform channel transmission of other carriers other than the target carrier on the target OFDM symbol, and correspondingly, the terminal device does not perform the channel transmission of other carriers other than the target carrier on the target OFDM symbol.

Specifically, assuming that by using manner 1, the first carrier is determined as the target carrier, and the second carrier is not the target carrier, the network device does not perform channel transmission of the second carrier on the target OFDM symbol. Similarly, the channel transmission of the second carrier may be downlink channel transmission, and the downlink channel transmission includes at least one of the following: an SSB, a PDCCH, a PDSCH, a CSI-RS, or the like.

Alternatively, the channel transmission of the second carrier may be uplink channel transmission, and the uplink channel transmission includes at least one of the following: a PUSCH, a PUCCH, a PRACH, an SRS, or the like.

Assuming that by using manner 2, the first carrier is determined as the target carrier, and the second carrier is not the target carrier, the network device does not perform channel transmission of the second carrier on the target OFDM symbol. The second carrier is uplink channel transmission or downlink channel transmission (opposite to the communication direction of the first carrier) configured by using the system information or the RRC signaling. Details are described above.

In a possible case, before the channel transmission of the target carrier is performed on the target OFDM symbol, the method further includes: determining that transmission B and DCI corresponding to transmission A meet a first relationship, where the transmission A is channel transmission of the first carrier on the target OFDM symbol, and the transmission B is channel transmission of the second carrier on the target OFDM symbol.

The first relationship may include: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

Specifically, FIG. 7 is a schematic diagram of a first relationship between transmission A and transmission B according to an embodiment of this application. As shown in FIG. 7, an end moment of a last symbol of a PDCCH on which DCI corresponding to the transmission A is located is t1, a start moment of a first symbol of the transmission B is t2, and t2-t1=T1≤first preset duration. A formula for calculating the first preset duration may be as follows:

$$\mathrm{T}_1 = \alpha * T_{proc,2} + d_1 \qquad (1)$$

$T_1$ is the first preset duration, $\alpha$ is a preset coefficient less than or equal to 1, for example, may be 0.25 or 0.5, and a value of $d_1$ is a length of a plurality of OFDM symbols, for example, a length of 0 OFDM symbol, a length of one OFDM symbol, or a length of two OFDM symbols. $T_{proc,2}$ is a minimum processing time of a terminal device from receiving DCI to sending a PUSCH scheduled by using the DCI. Correspondingly, in FIG. 7, $T_{proc,2}$ is t3-t2. In this way, it may be ensured that a terminal device may learn about scheduling information of the transmission A before performing the transmission B, to learn about existence of the transmission A, so that the terminal device may discard the transmission B in time, and avoid a channel conflict.

Alternatively, FIG. 8 is a schematic diagram of another first relationship between transmission A and transmission B according to an embodiment of this application. As shown in FIG. 8, an end moment of a last symbol of a PDCCH on which DCI corresponding to the transmission A is located is r1, a start moment of a first symbol of a target OFDM symbol is r2, and r2-r1=T2≤second preset duration. A formula for calculating the second preset duration may be formula (1). It should be noted that, assuming that the target OFDM symbol is a plurality of symbols, r2 is a start moment of a first symbol in the target OFDM symbol. Assuming that the target OFDM symbol is one symbol, r2 is a start moment of the target OFDM symbol. According to the foregoing process, it may be ensured that the terminal device may learn about scheduling information of the transmission A before performing the transmission B, to learn about existence of the transmission A, so that the terminal device can discard the transmission B in time, and avoid a channel conflict.

In a possible case, compared with a case in which the first carrier and the second carrier are located in one same band, when the first carrier and the second carrier are located in different bands, the first preset duration or the second preset duration is shorter. This is because two different sets of transceiver links may be configured for the terminal device in different bands. Therefore, transmission on the first carrier and the second carrier may be prepared in advance. Because the first preset duration or the second preset duration is shorter, the network device has higher flexibility in scheduling transmission A.

The foregoing two cases include a manner of determining a target carrier when only one carrier has channel transmission and when there are two different types of channel transmission (channel transmission dynamically scheduled by using DCI and channel transmission configured by using system information or RRC signaling). When the two carriers include a same type of channel transmission, a target carrier may be determined based on another channel priority or signal priority. This is not limited in this embodiment of this application.

It should be noted that the foregoing channel transmission is potential transmission configured by using higher-layer signaling or scheduled by using DCI. For downlink transmission, a network device may send downlink transmission to a terminal device (UE) on a time-frequency resource corresponding to the downlink transmission, and the UE needs to attempt to receive the downlink transmission on the time-frequency resource. For example, for potential PDCCH transmission configured by using the RRC signaling, the network device may send a PDCCH to the UE on the PDCCH time-frequency resource and carry DCI, and the UE needs to perform PDCCH detection on the PDCCH time-frequency resource. For another example, a PDSCH includes semi-persistent scheduling (Semi-persistent Scheduling, SPS) PDSCH transmission configured by using the RRC signaling and PDSCH transmission dynamically scheduled by using the DCI. For an SPS PDSCH, the network device may send PDSCH transmission to the UE on the SPS PDSCH time-frequency resource, and the terminal device needs to attempt to receive the SPS PDSCH.

Similarly, for uplink transmission, the UE may send uplink transmission to the network device on a time-frequency resource corresponding to the uplink transmission, and the network device needs to attempt to receive the uplink transmission on the time-frequency resource. For example, PUSCH transmission includes a configured grant (Configured grant, CG) PUSCH configured by using the RRC signaling and a PUSCH dynamically scheduled by using the DCI. For these PUSCH transmissions, the UE may send uplink transmission at these locations, or may not send uplink transmission due to some reasons. For example, when a higher layer does not deliver a data block, a physical layer does not perform uplink transmission on a corresponding time-frequency resource.

After the terminal device obtains the scheduling information of at least one of the first carrier and the second carrier on the target OFDM symbol, the target carrier determined based on the scheduling information is one of carriers that include effective channel transmission. The effective channel transmission means that in the carrier, in addition to transmission configured by using the higher-layer signaling or scheduled by using the DCI, the network device or the terminal device actually performs channel transmission.

Therefore, in an optional case, determining the target carrier based on the scheduling information may be performed before the network device or the terminal device sends data/signal or receives data/signal. When data/signal transmission to be performed occupies the target OFDM symbol, it is determined that whether the target OFDM symbol is occupied by another carrier, whether the target OFDM symbol is occupied by a carrier on which data and/or signal transmission of the target OFDM symbol is located, or the like.

After determining the target carrier, the terminal device performs channel transmission on the target carrier on the target OFDM symbol. To be specific, the terminal device transmits the data and/or the signal on the target carrier on the target OFDM symbol according to the communication direction of the target carrier. If the channel transmission on the target carrier is uplink channel transmission, the terminal device sends the data and/or the signal to the network device on the target carrier, and the network device receives the data and/or the signal on the target carrier. If the channel transmission on the target carrier is downlink channel transmission, the network device sends the data and/or the signal on the target carrier, and the terminal device receives, on the target carrier, the data and/or the signal sent by the network device.

It can be seen that, in this embodiment of this application, the scheduling information on the target OFDM symbol is received to determine the target carrier that has channel transmission on the target OFDM symbol, so that when the channel transmission of the target carrier is performed on the target OFDM symbol, a requirement of performing unidirectional transmission of only one carrier is met, and a time domain resource is preferentially allocated to a carrier that has a transmission requirement currently, and is not used to wait for transmission that has not arrived, thereby improving transmission resource utilization and reducing a waiting delay.

In a conventional technology, in a carrier aggregation (Carrier Aggregation, CA) scenario, for a case in which a plurality of carriers (Component Carrier, CCs) are configured for UE, if TDD frame structures of these CCs are different, for example, on some symbols, CC #1 is downlink and CC #2 is uplink, because the UE does not support simultaneous sending and receiving on two CCs, a half-duplex behavior specification for the UE includes the following:

A reference carrier (reference carrier) priority principle. Because in a TDD system, one CC corresponds to one cell, a reference carrier may also be understood as a reference cell (Ref. Cell). For each OFDM symbol, one reference carrier is determined from a group of CCs configured for the UE, and carriers other than the reference carrier are referred to as other carriers (other carrier), which may also be understood as other cells (other cells) similarly. For different symbols, Ref. Cells may be different. For one symbol, the Ref. Cell is indicated as Semi-D, Semi-U, or Semi-F on this symbol and has configured transmission (that is, RRC-D or RRC-U), and is a cell with a minimum cell ID in cells that meet these conditions.

In the foregoing nouns, a downlink symbol, an uplink symbol, or a flexible symbol that is indicated only by using *tdd-UL-DL-ConfigurationCommon* or *tdd-UL-DL-ConfigurationDedicated* is referred to as a semi-persistent downlink symbol (Semi-D)/semi-persistent uplink symbol (Semi-U)/semi-persistent flexible symbol (Semi-F). If downlink transmission or uplink transmission is configured on the Semi-F symbol by using RRC signaling, a corresponding symbol is RRC-D or RRC-U. Downlink or uplink transmission dynamically scheduled by using DCI is marked as Dynamic-D/Dynamic-U.

An existing conflict resolution rule has some defects, for example, flexibility of the conflict rule is low, and that URLLC transmission and eMBB transmission have different urgency and priorities is not considered. Therefore, the conflict resolution rule is not friendly to URLLC application.

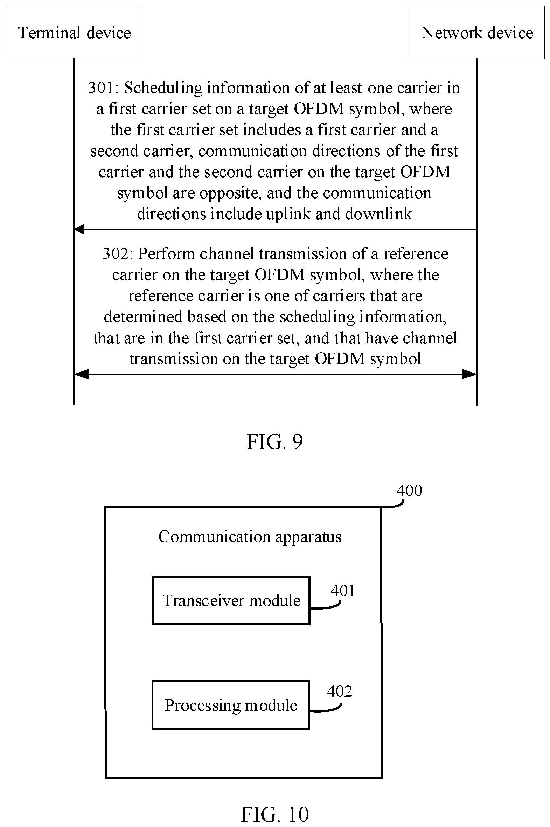

Based on this, FIG. 9 is a flowchart of a signal transmission method according to an embodiment of this application. As shown in FIG. 9, the method includes the following steps:

301: A network device sends scheduling information of at least one carrier in a first carrier set on a target orthogonal frequency division multiplexing OFDM symbol. Correspondingly, a terminal device receives the scheduling information of the at least one carrier in the first carrier set on the target OFDM symbol.

Specifically, the first carrier set includes a first carrier and a second carrier. The first carrier corresponds to a first TDD frame structure configuration, the second carrier corresponds to a second TDD frame structure configuration, communication directions of the first carrier and the second carrier on the target OFDM symbol are opposite, and the communication directions include uplink and downlink.

In this embodiment of this application, the first carrier set represents a set of frequency domain resources, which may be referred to as a first frequency domain resource set. A plurality of carriers in the first carrier set represent that one frequency domain resource set includes a plurality of frequency domain resources. When the plurality of frequency domain resources are the plurality of carriers, the plurality of carriers may belong to one band or may belong to a plurality of bands. Optionally, the frequency domain resource may be a BWP, the first frequency domain resource set includes a plurality of BWPs, and the plurality of BWPs may belong to one carrier or may belong to a plurality of carriers. Optionally, the frequency domain resource is a subband, the first frequency domain resource set includes a plurality of subbands, and the plurality of subbands may belong to one BWP or may belong to a plurality of BWPs. Without loss of generality, the following uses an example in which a frequency domain resource is a carrier for description. To be specific, a first frequency domain resource set is a first carrier set, a first frequency domain resource is a first carrier, and a second frequency domain resource is a second carrier. It may be inferred that the first frequency domain resource set may be described by using a first BWP set, and the first frequency domain resource and the second frequency domain resource may be described by using a first BWP and a second BWP; or the first frequency domain resource set may be described by using a first subband set, and the first frequency domain resource and the second frequency domain resource may be described by using other frequency domain resources such as a first subband and a second subband. This is not limited in this embodiment of this application.

Optionally, a TDD frame structure is a TDD frame structure that is semi-persistently configured. Optionally, a TDD frame structure is a frame structure that is semi-persistently and dynamically indicated.

Same as the descriptions in embodiments corresponding to FIG. 5 to FIG. 8, in this embodiment of this application, the network device sends the scheduling information of the at least one carrier in the first carrier set on the target OFDM symbol to the terminal device. The first carrier set includes the first carrier and the second carrier, and the first carrier and the second carrier are two carriers whose communication directions of frame structure configurations are opposite on the target OFDM symbol. The scheduling information may include higher-layer signaling configuration information and DCI dynamic scheduling information. The higher-layer signaling configuration information includes system information or information configured by using RRC signaling.

302: The network device performs channel transmission of a reference carrier on the target OFDM symbol. Correspondingly, the terminal device performs the channel transmission of the reference carrier on the target OFDM symbol.

Specifically, the reference carrier is one of carriers that are determined based on the scheduling information, that are in the first carrier set, and that have channel transmission on the target OFDM symbol.

After obtaining the scheduling information of the at least one carrier in the first carrier set, the terminal device may determine a reference carrier in the first carrier set based on the scheduling information. The reference carrier is one of carriers that are in the first carrier set and that have channel transmission on the target OFDM symbol, and specifically includes the following meanings: First, assuming that one carrier in the first carrier set has channel transmission on the target OFDM symbol, and another carrier does not have channel transmission on the target OFDM symbol, the reference carrier is the carrier that has channel transmission. Second, assuming that a plurality of carriers in the first carrier set have channel transmission on the target OFDM symbol, the reference carrier is a carrier with a minimum carrier ID in the carriers that have channel transmission. In the two manners of determining the reference carrier, only whether there is channel transmission on the carrier and a size of the carrier ID are considered. In a possible case, assuming that communication directions of carriers that both have channel transmission on the target OFDM symbol are the same, the reference carriers may be the two carriers. To be specific, channel transmission of the two carriers with same transmission may be simultaneously performed on the target OFDM symbol.

Optionally, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

For descriptions of the communication directions, refer to related descriptions in FIG. 5 to FIG. 8. Details are not described herein again.

Optionally, when the first carrier has channel transmission scheduled or triggered by using downlink control information DCI on the target OFDM symbol, and the second carrier has channel transmission configured by using system information or RRC signaling on the target OFDM symbol, the reference carrier is the first carrier.

The first carrier and the second carrier are two carriers whose communication directions are opposite on the target OFDM symbol. When both the two carriers have channel transmission on the target OFDM symbol, assuming that the first carrier has channel transmission (or may be referred to as transmission that is dynamically scheduled) scheduled or triggered by using DCI on the target OFDM symbol, and the second carrier has channel transmission (or may be referred to as transmission/configuration transmission that is semi-persistently scheduled) configured by using system information or RRC signaling on the target OFDM symbol, because the transmission that is dynamically scheduled is usually more urgent or has a higher priority, a communication resource preferentially satisfies the transmission that is dynamically scheduled. To be specific, the first carrier is determined as the reference carrier.

In a possible example, the first carrier set includes a first carrier subset and a second carrier subset, and that the reference carrier is one of carriers that are in the first carrier set and that have channel transmission on the target OFDM symbol includes: When a carrier in the first carrier subset has the channel transmission scheduled or triggered by using the downlink control information DCI on the target OFDM symbol, and a carrier in the second carrier subset has the channel transmission configured by using the system information or the RRC signaling on the target OFDM symbol, the reference carrier is a carrier that has a minimum carrier ID in the first carrier subset.

In some cases, the first carrier set includes the first carrier subset and the second carrier subset. The first carrier subset is a carrier that has channel transmission scheduled or triggered by using the DCI on the target OFDM symbol, and the second carrier subset is a carrier that has channel transmission configured by using the system information or the RRC signaling on the target OFDM symbol. The first carrier subset may include one or more carriers, and the second carrier subset may include one or more carriers. When the first carrier subset includes a plurality of carriers, a carrier with a minimum carrier ID is determined as a reference carrier, and transmission of the reference carrier is performed on the target OFDM symbol. In this way, a conflict on communication directions of a plurality of channel transmission scheduled or triggered by using the DCI may be resolved.

In a possible case, before the first carrier is the reference carrier and transmission of the reference carrier is performed on the target OFDM symbol, the method further includes: determining that transmission Band DCI corresponding to transmission A meet a first relationship, where the transmission A is channel transmission of the first carrier on the target OFDM symbol, and the transmission B is channel transmission of the second carrier on the target OFDM symbol. In this way, it may be ensured that a terminal device may learn about scheduling information of the transmission A before performing the transmission B, to learn about existence of the transmission A, so that the terminal device may discard the transmission B in time, and avoid a channel conflict.

The first relationship may include: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

A formula for calculating the first preset duration or the second preset duration may be as follows:

$$\mathrm{T}_1 = \alpha * T_{proc,2} + d_1 \tag{1}$$

$T_1$ is the first preset duration or the second preset duration, $\alpha$ is a preset coefficient less than or equal to 1, for example, may be 0.25 or 0.5, and a value of $d_1$ is a length of a plurality of OFDM symbols, for example, a length of 0 OFDM symbol, a length of one OFDM symbol, or a length of two OFDM symbols. $T_{proc,2}$ is a minimum processing time of a terminal device from receiving DCI to sending a PUSCH scheduled by using the DCI. Correspondingly, in FIG. 7, $T_{proc,2}$ is t3-t2.

For related descriptions of the transmission A of the first carrier on the target OFDM symbol, the transmission B of the second carrier on the target OFDM symbol, and the transmission B and the DCI corresponding to the transmission A that meet the first relationship, refer to the corresponding descriptions in FIG. 5 to FIG. 8. Details are not described in this embodiment of this application.

After determining the reference carrier, the terminal device performs channel transmission on the target OFDM symbol based on an existing rule of priority of channel transmission between the reference carrier and another carrier, including sending uplink data and/or signaling to the network device on the target OFDM symbol, or receiving, on the target OFDM symbol, downlink data and/or signaling sent by the network device.

Similarly, after determining the reference carrier, the network device performs channel transmission on the target OFDM symbol based on an existing rule of priority of channel transmission between the reference carrier and another carrier, including receiving, on the target OFDM symbol, uplink data and/or signaling sent by the terminal device, or sending downlink data and/or signaling to the terminal device on the target OFDM symbol.

It can be seen that, in this embodiment of this application, the reference carrier is redefined or supplemented, to enable the determined reference carrier to be a carrier that has channel transmission. In this way, when channel transmission is performed on the target OFDM symbol according to a reference carrier priority principle, a time domain resource can be preferentially allocated to a carrier that has a transmission requirement currently, and is not used to wait for transmission that has not arrived, thereby improving transmission resource utilization and reducing a waiting delay.

FIG. 10 shows a communication apparatus 400 according to an embodiment of this application. The communication apparatus 400 may be configured to perform the methods and the specific embodiments performed by the terminal device in FIG. 5 to FIG. 8. In a possible implementation, as shown in FIG. 10, the apparatus 400 includes a transceiver module 401.

The transceiver module 401 is configured to receive scheduling information of at least one of a first carrier and a second carrier on a target orthogonal frequency division multiplexing OFDM symbol, where communication directions of the first carrier and the second carrier on the target OFDM symbol are opposite, and the communication directions include uplink and downlink.

The transceiver module 401 is further configured to perform channel transmission of a target carrier on the target OFDM symbol, where the target carrier is one of carriers that are determined based on the scheduling information, that are of the first carrier and the second carrier, and that have channel transmission on the target OFDM symbol.

Optionally, the scheduling information is TDD frame structure configuration information of the first carrier and/or the second carrier, or downlink control information DCI the first carrier and/or the second carrier.

Optionally, the TDD frame structure configuration information is indicated by a network device by using RRC signaling.

Optionally, the first carrier and the second carrier are two carriers in one band. Optionally, the band corresponds to one radio frequency filter.

Optionally, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

Optionally, that the target carrier is one of carriers that are of the first carrier and the second carrier and that have channel transmission includes: If one of the first carrier and the second carrier has channel transmission, and the other carrier does not have channel transmission, the target carrier is the carrier that has channel transmission.

Optionally, the first carrier has channel transmission on the target OFDM symbol, the target carrier is the first carrier, channel transmission of the first carrier is downlink channel transmission, and the downlink channel transmission includes at least one of the following: a synchronization signal/broadcast channel block SSB, a physical downlink control channel PDCCH, a physical downlink shared channel PDSCH, or a channel state information-reference signal CSI-RS; or the first carrier has channel transmission on the target OFDM symbol, the target carrier is the first carrier, channel transmission of the first carrier is uplink channel transmission, and the uplink channel transmission includes at least one of the following: a physical uplink shared channel PUSCH, a physical uplink control channel PUCCH, a physical random access channel PRACH, or an uplink sounding reference signal SRS.

Optionally, that the target carrier is one of carriers that are of the first carrier and the second carrier and that have channel transmission includes: If both the first carrier and the second carrier have channel transmission on the target OFDM symbol, the first carrier includes channel transmission scheduled or triggered by using downlink control information DCI, and the second carrier includes channel transmission configured by using system information or RRC signaling, the target carrier is the first carrier.

Optionally, when the channel transmission scheduled or triggered by using the downlink control information DCI is uplink channel transmission, the uplink channel transmission includes at least one of the following: a PUSCH, a PUCCH carrying a hybrid automatic repeat request-acknowledgment HARQ-ACK of a PDSCH that is dynamically scheduled, a PUCCH carrying aperiodic-channel state information A-CSI, an aperiodic SRS, and a PRACH; and when the channel transmission scheduled or triggered by using the downlink control information DCI is downlink channel transmission, the downlink channel transmission includes at least one of the following: a PDSCH and an aperiodic CSI-RS.

Optionally, when the channel transmission configured by using the system information or the RRC signaling is downlink transmission, the downlink channel transmission includes at least one of the following: a PDCCH, a semi-persistent scheduling SPS PDSCH, a periodic or semi-persistent channel state information-reference signal CSI-RS, and an SSB; and when the channel transmission configured by using the system information or the RRC signaling is uplink transmission, the downlink channel transmission includes one or more of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, and a PRACH.

Optionally, the apparatus 400 further includes a processing module 402, configured to determine that transmission B and DCI corresponding to transmission A meet a first relationship, where the transmission A is channel transmission of the first carrier on the target OFDM symbol, and the transmission B is channel transmission of the second carrier on the target OFDM symbol.

Optionally, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

Optionally, a method for calculating the first preset duration or the second preset duration is as follows:

$$T_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

Alternatively, the communication apparatus 400 may be configured to perform the method and the specific embodiment performed by the terminal device in FIG. 9. The transceiver module 401 is configured to receive scheduling information of at least one carrier in a first carrier set on a target OFDM symbol, where the first carrier set includes a first carrier and a second carrier, communication directions of the first carrier and the second carrier on the target OFDM symbol are opposite, and the communication directions include uplink and downlink.

The transceiver module 401 is further configured to perform channel transmission of a reference carrier on the target OFDM symbol, where the reference carrier is one of carriers that are determined based on the scheduling information, that are in the first carrier set, and that have channel transmission on the target OFDM symbol.

Optionally, a TDD frame structure is indicated by a network device by using RRC signaling.

Optionally, the first carrier and the second carrier are two carriers in one band. Optionally, the band corresponds to one radio frequency filter.

Optionally, all carriers in the first carrier set are located in one same band.

Optionally, that the communication direction is the uplink includes: A first TDD frame structure configuration of the first carrier or a second TDD frame structure configuration of the second carrier is an uplink symbol on the target OFDM symbol, or there is uplink channel transmission on the target symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

Optionally, that the reference carrier is one of carriers that are in the first carrier set and that have channel transmission on the target OFDM symbol includes: The reference carrier is a carrier that is in the first carrier set, that has channel transmission on the target OFDM symbol, and that has a minimum carrier ID.

Optionally, that the reference carrier is one of carriers that are in the first carrier set and that have channel transmission on the target OFDM symbol includes: When the first carrier has channel transmission scheduled or triggered by using downlink control information DCI on the target OFDM symbol, and the second carrier has channel transmission configured by using system information or RRC signaling on the target OFDM symbol, the reference carrier is the first carrier.

In a possible example, the first carrier set includes a first carrier subset and a second carrier subset, and that the reference carrier is one of carriers that are in the first carrier set and that have channel transmission on the target OFDM symbol includes: When a carrier in the first carrier subset has the channel transmission scheduled or triggered by using the downlink control information DCI on the target OFDM symbol, and a carrier in the second carrier subset has the channel transmission configured by using the system information or the RRC signaling on the target OFDM symbol, the reference carrier is a carrier that has a minimum carrier ID in the first carrier subset.

Optionally, the processing module 402 of the apparatus 400 is configured to determine that transmission B and DCI corresponding to transmission A meet a first relationship, where the transmission A is channel transmission of the first carrier on the target OFDM symbol, and the transmission B is channel transmission of the second carrier on the target OFDM symbol.

Optionally, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In a possible example, a method for calculating the first preset duration or the second preset duration is as follows:

$$T_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

Optionally, the processing module 402 may be a central processing unit (Central Processing Unit, CPU).

Optionally, the transceiver module 401 may be an interface circuit or a transceiver. The transceiver module 401 is configured to receive or send data or instructions from another electronic apparatus, for example, in the foregoing process, receive the scheduling information of the at least one carrier in the first carrier set on the target OFDM symbol, and perform channel transmission of the target carrier on the target OFDM symbol.

Optionally, the communication apparatus 400 may further include a storage module (not shown in the figure). The storage module may be configured to store data and/or signaling. The storage module may be coupled to the transceiver module 401 and the processing module 402. For example, the processing module 402 may be configured to read the data and/or the signaling in the storage module, so that a process of determining that the transmission B and the DCI corresponding to the transmission A meet the first relationship in the foregoing method embodiment is performed.

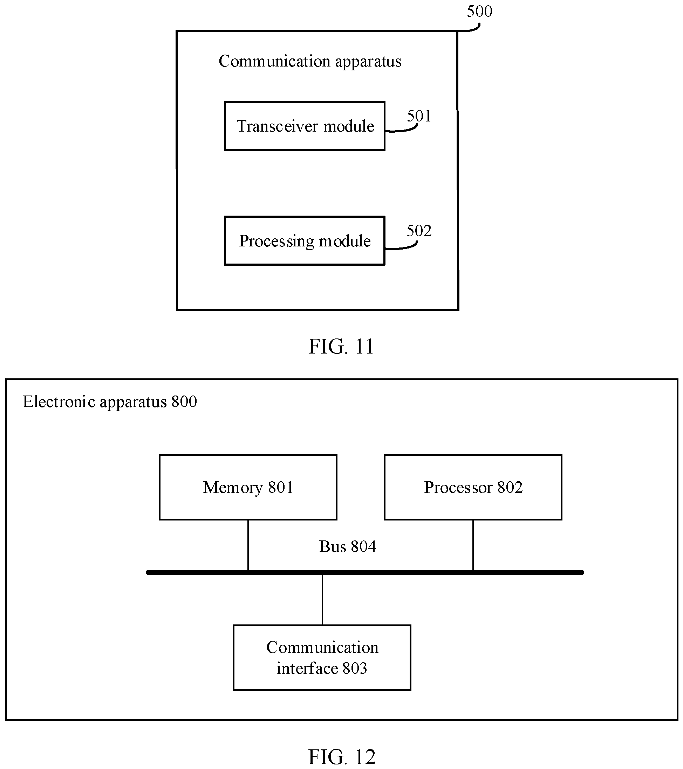

FIG. 11 shows a communication apparatus 500 according to an embodiment of this application. The communication apparatus 500 may be configured to perform the methods and the specific embodiments performed by the network device in FIG. 5 to FIG. 8. In a possible implementation, as shown in FIG. 11, the apparatus 500 includes a transceiver module 501.

The transceiver module 501 is configured to send scheduling information of at least one of a first carrier and a second carrier on a target orthogonal frequency division multiplexing OFDM symbol, where communication directions of the first carrier and the second carrier on the target OFDM symbol are opposite, and the communication directions include uplink and downlink.

The transceiver module 501 is further configured to perform channel transmission of a target carrier on the target OFDM symbol, where the target carrier is one of carriers that are determined based on the scheduling information, that are of the first carrier and the second carrier, and that have channel transmission on the target OFDM symbol.

Optionally, the scheduling information is TDD frame structure configuration information of the first carrier and/or the second carrier, or downlink control information DCI the first carrier and/or the second carrier.

Optionally, the TDD frame structure configuration information is indicated by a network device by using RRC signaling.

Optionally, the first carrier and the second carrier are two carriers in one band. Optionally, the band corresponds to one radio frequency filter.

Optionally, that the communication direction is the uplink includes: A first TDD frame structure configuration of the first carrier or a second TDD frame structure configuration of the second carrier is an uplink symbol on the target OFDM symbol, or there is uplink channel transmission on the target symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

Optionally, that the target carrier is one of carriers that are of the first carrier and the second carrier and that have channel transmission includes: If one of the first carrier and the second carrier has channel transmission, and the other carrier does not have channel transmission, the target carrier is the carrier that has channel transmission.

Optionally, the first carrier has channel transmission on the target OFDM symbol, the target carrier is the first carrier, channel transmission of the first carrier is downlink channel transmission, and the downlink channel transmission includes at least one of the following: a synchronization signal/broadcast channel block SSB, a physical downlink control channel PDCCH, a physical downlink shared channel PDSCH, or a channel state information-reference signal CSI-RS; or the first carrier has channel transmission on the target OFDM symbol, the target carrier is the first carrier, channel transmission of the first carrier is uplink channel transmission, and the uplink channel transmission includes at least one of the following: a physical uplink shared channel PUSCH, a physical uplink control channel PUCCH, a physical random access channel PRACH, or an uplink sounding reference signal SRS.

Optionally, that the target carrier is one of carriers that are of the first carrier and the second carrier and that have channel transmission includes: If both the first carrier and the second carrier have channel transmission on the target OFDM symbol, the first carrier includes channel transmission scheduled or triggered by using downlink control information DCI, and the second carrier includes channel transmission configured by using system information or RRC signaling, the target carrier is the first carrier.

Optionally, when the channel transmission scheduled or triggered by using the downlink control information DCI is uplink channel transmission, the uplink channel transmission includes at least one of the following: a PUSCH, a PUCCH carrying a hybrid automatic repeat request-acknowledgment HARQ-ACK of a PDSCH that is dynamically scheduled, a PUCCH carrying aperiodic-channel state information A-CSI, an aperiodic SRS, and a PRACH; and when the channel transmission scheduled or triggered by using the downlink control information DCI is downlink channel transmission, the downlink channel transmission includes at least one of the following: a PDSCH and an aperiodic CSI-RS.

Optionally, when the channel transmission configured by using the system information or the RRC signaling is downlink transmission, the downlink channel transmission includes at least one of the following: a PDCCH, a semi-persistent scheduling SPS PDSCH, a periodic or semi-persistent channel state information-reference signal CSI-RS, and an SSB; and when the channel transmission configured by using the system information or the RRC signaling is uplink transmission, the downlink channel transmission includes one or more of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, and a PRACH.

Optionally, the apparatus 500 includes a processing module 502, configured to determine that transmission B and DCI corresponding to transmission A meet a first relationship, where the transmission A is channel transmission of the first carrier on the target OFDM symbol, and the transmission B is channel transmission of the second carrier on the target OFDM symbol.

Optionally, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In a possible example, a method for calculating the first preset duration or the second preset duration is as follows:

$$T_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc,2}$ is a minimum processing time of a terminal device from receiving DCI to sending a PUSCH scheduled by using the DCI.

Alternatively, the communication apparatus 500 may be configured to perform the method and the specific embodiment performed by the network device in FIG. 9. The transceiver module 501 is configured to send scheduling information of at least one carrier in a first carrier set on a target orthogonal frequency division multiplexing OFDM symbol, where the first carrier set includes a first carrier and a second carrier, communication directions of the first carrier and the second carrier on the target OFDM symbol are opposite, and the communication directions include uplink and downlink.

The transceiver module 501 is further configured to perform channel transmission of a reference carrier on the target OFDM symbol, where the reference carrier is one of carriers that are determined based on the scheduling information, that are in the first carrier set, and that have channel transmission on the target OFDM symbol.

In a possible example, a TDD frame structure is indicated by a network device by using RRC signaling.

In a possible example, the first carrier and the second carrier are two carriers in one band. Optionally, the band corresponds to one radio frequency filter.

In a possible example, all carriers in the first carrier set are located in one same band.

In a possible example, that the communication direction is the uplink includes: A first TDD frame structure configuration of the first carrier or a second TDD frame structure configuration of the second carrier is an uplink symbol on the target OFDM symbol, or there is uplink channel transmission on the target OFDM symbol. In addition/alternatively, that the communication direction is the downlink includes: A first TDD frame structure configuration of the first carrier or a second TDD frame structure configuration of the second carrier is a downlink symbol on the target OFDM symbol, or there is downlink channel transmission on the target symbol.

Optionally, that the reference carrier is one of carriers that are in the first carrier set and that have channel transmission on the target OFDM symbol includes: The reference carrier is a carrier that is in the first carrier set, that has channel transmission on the target OFDM symbol, and that has a minimum carrier ID.

Optionally, that the reference carrier is one of carriers that are in the first carrier set and that have channel transmission on the target OFDM symbol includes: When the first carrier has channel transmission scheduled or triggered by using downlink control information DCI on the target OFDM symbol, and the second carrier has channel transmission configured by using system information or RRC signaling on the target OFDM symbol, the reference carrier is the first carrier.

In a possible example, the first carrier set includes a first carrier subset and a second carrier subset, and that the reference carrier is one of carriers that are in the first carrier set and that have channel transmission on the target OFDM symbol includes: When a carrier in the first carrier subset has the channel transmission scheduled or triggered by using the downlink control information DCI on the target OFDM symbol, and a carrier in the second carrier subset has the channel transmission configured by using the system information or the RRC signaling on the target OFDM symbol, the reference carrier is a carrier that has a minimum carrier ID in the first carrier subset.

Optionally, the processing module 502 of the apparatus 500 is configured to determine that transmission B and DCI corresponding to transmission A meet a first relationship, where the transmission A is channel transmission of the first carrier on the target OFDM symbol, and the transmission B is channel transmission of the second carrier on the target OFDM symbol.

Optionally, the first relationship includes: A distance between a start moment of a first symbol of the transmission B and an end moment of a last symbol of a PDCCH on which the DCI corresponding to the transmission A is located is greater than or equal to first preset duration; or a distance between a start moment of a first symbol of the target OFDM symbol and an end moment of a last symbol of a PDCCH on which the DCI corresponding to the transmission A is located is greater than or equal to second preset duration.

In a possible example, a method for calculating the first preset duration or the second preset duration is as follows:

$$T_1 = \alpha * T_{proc,2} + d_1$$

$T_1$ is the first preset duration or the second preset duration, $\alpha$ is a preset coefficient less than or equal to 1, a value of $d_1$ is a length of 0 OFDM symbol, a length of one OFDM symbol, or a length of two OFDM symbols, and $T_{proc2}$ is a minimum processing time of a terminal device from receiving DCI to sending a PUSCH scheduled by using the DCI.

Optionally, the transceiver module 501 may be an interface circuit or a transceiver. The transceiver module 401 is configured to receive or send data or instructions from another electronic apparatus, for example, send the scheduling information of the at least one of the first carrier and the second carrier on the target OFDM symbol, and perform channel transmission of the target carrier on the target OFDM symbol.

Optionally, the processing module 502 may be a central processing unit (Central Processing Unit, CPU).

Optionally, the communication apparatus 500 may further include a storage module (not shown in the figure). The storage module may be configured to store data and/or signaling. The storage module may be coupled to the transceiver module 501 and the processing module 502. For example, the processing module 502 may be configured to read the data and/or the signaling in the storage module, so that the network device in the foregoing method embodiment determines the target carrier or the reference carrier.

FIG. 12 is a schematic diagram of a hardware structure of an electronic apparatus according to an embodiment of this application. For structures of the communication apparatus 400 and the communication apparatus 500, refer to the structure shown in FIG. 12. An electronic apparatus 800 includes a memory 801, a processor 802, a communication interface 803, and a bus 804. The memory 801, the processor 802, and the communication interface 803 implement communication connection between each other through the bus 804.

The memory 801 may be a read-only memory (Read-Only Memory, ROM), a static storage device, a dynamic storage device, or a random access memory (Random Access Memory, RAM). The memory 801 may store a program. When the program stored in the memory 801 is executed by the processor 802, the processor 802 and the communication interface 803 are configured to perform the steps of the distributed rendering method in embodiments of this application.

The processor 802 may be a general-purpose CPU, a microprocessor, an application-specific integrated circuit (Application Specific Integrated Circuit, ASIC), a GPU, or one or more integrated circuits, and is configured to execute a related program, to implement functions that need to be performed by the transceiver module 401 and the processing module 402 in the communication apparatus 400 in this embodiment of this application, or implement functions that need to be performed by the transceiver module 501 and the processing module 502 in the communication apparatus 500, or perform the signal transmission method in the method embodiments of this application.

The processor 802 may alternatively be an integrated circuit chip and has a signal processing capability. In an implementation process, the steps of the distributed rendering method in this application may be completed by using a hardware integrated logic circuit or an instruction in a form of software in the processor 802. The processor 802 may alternatively be a general-purpose processor, a digital signal processor (Digital Signal Processing, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 801. The processor 802 reads information in the memory 801, and completes, in combination with hardware of the processor 802, functions that need to be performed by modules included in the virtual reality video sending apparatus 400 or the virtual reality video receiving apparatus 500 in this embodiment of this application, or performs the virtual reality video transmission method in the method embodiments of this application.

The communication interface 803 uses, for example, a transceiver apparatus, but not limited to a transceiver, to implement communication between the electronic apparatus 800 and another device or a communication network. For example, determined segmentation target and/or determined candidate target border box may be obtained by using the communication interface 803. The bus 804 may include a channel through which information is transmitted between parts (for example, the memory 801, the processor 802, and the communication interface 803) of the electronic apparatus 800.

It should be noted that, although only the memory, the processor, and the communication interface are shown in the electronic apparatus 800 in FIG. 12, during specific implementation, a person skilled in the art should understand that the electronic apparatus 800 further includes other components required for implementing normal operation. In addition, based on a specific requirement, a person skilled in the art should understand that the electronic apparatus 800 may further include a hardware component for implementing another additional function. In addition, a person skilled in the art should understand that the electronic apparatus 800 may also include only components required for implementing embodiments of this application, but does not need to include all the components shown in FIG. 12.

It should be understood that, in the embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that the example modules, algorithms, and steps described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the system, apparatus, and module described above, refer to the corresponding process in the foregoing method embodiments. Details are not described herein.

In several embodiments provided in this application, it should be understood that the disclosed system, apparatus, and method may be implemented in other manners. For example, the described apparatus embodiment is merely an example. For example, division into the modules is merely logical function division. There may be another division manner during actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or modules may be implemented in electrical, mechanical, or other forms.

The modules described as separate parts may or may not be physically separate, and parts displayed as modules may or may not be physical modules, may be located in one position, or may be distributed on a plurality of network modules. Some or all of the modules may be selected based on an actual requirement, to achieve objectives of the solutions in embodiments.

In addition, functional modules in embodiments of this application may be integrated into one processing module, each module may exist alone physically, or two or more modules may be integrated into one module.

When the functions are implemented in a form of a software functional module and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

**Claims**

1. A signal transmission method, wherein the method comprises:

   receiving scheduling information of at least one of a first carrier and a second carrier on a target orthogonal frequency division multiplexing OFDM symbol, wherein communication directions of the first carrier and the second carrier on the target OFDM symbol are opposite, and the communication directions comprise uplink and downlink; and

performing channel transmission of a target carrier on the target OFDM symbol, wherein the target carrier is one of carriers that are of the first carrier and the second carrier and that have channel transmission on the target OFDM symbol.

2. The method according to claim 1, wherein that the communication direction is the uplink comprises:

a first TDD frame structure configuration of the first carrier or a second TDD frame structure configuration of the second carrier is an uplink symbol on the target OFDM symbol, or there is uplink channel transmission on the target OFDM symbol; and/or

that the communication direction is the downlink comprises: a first TDD frame structure configuration of the first carrier or a second TDD frame structure configuration of the second carrier is a downlink symbol on the target OFDM symbol, or there is downlink channel transmission on the target symbol.

3. The method according to claim 1 or 2, wherein that the target carrier is one of carriers that are of the first carrier and the second carrier and that have channel transmission comprises: if one of the first carrier and the second carrier has channel transmission, and the other carrier does not have channel transmission, the target carrier is the carrier that has channel transmission.

4. The method according to claim 3, wherein the first carrier has channel transmission on the target OFDM symbol, the target carrier is the first carrier, channel transmission of the first carrier is downlink channel transmission, and the downlink channel transmission comprises at least one of the following: a synchronization signal/broadcast channel block SSB, a physical downlink control channel PDCCH, a physical downlink shared channel PDSCH, or a channel state information-reference signal CSI-RS; or

the first carrier has channel transmission on the target OFDM symbol, the target carrier is the first carrier, channel transmission of the first carrier is uplink channel transmission, and the uplink channel transmission comprises at least one of the following: a physical uplink shared channel PUSCH, a physical uplink control channel PUCCH, a physical random access channel PRACH, or an uplink sounding reference signal SRS.

5. The method according to claim 1 or 2, wherein that the target carrier is one of carriers that are of the first carrier and the second carrier and that have channel transmission comprises: if both the first carrier and the second carrier have channel transmission on the target OFDM symbol, the first carrier comprises channel transmission scheduled or triggered by using downlink control information DCI, and the second carrier comprises channel transmission configured by using system information or RRC signaling, the target carrier is the first carrier.

6. The method according to claim 5, wherein when the channel transmission scheduled or triggered by using the downlink control information DCI is uplink channel transmission, the uplink channel transmission comprises at least one of the following:

a PUSCH, a PUCCH carrying a hybrid automatic repeat request-acknowledgment HARQ-ACK of a PDSCH that is dynamically scheduled, a PUCCH carrying aperiodic-channel state information A-CSI, an aperiodic SRS, and a PRACH; and

when the channel transmission scheduled or triggered by using the downlink control information DCI is downlink channel transmission, the downlink channel transmission comprises at least one of the following: a PDSCH and an aperiodic CSI-RS.

7. The method according to claim 5 or 6, wherein when the channel transmission configured by using the system information or the RRC signaling is downlink transmission, the downlink channel transmission comprises at least one of the following: a PDCCH, a semi-persistent scheduling SPS PDSCH, a periodic or semi-persistent channel state information-reference signal CSI-RS, and an SSB; and

when the channel transmission configured by using the system information or the RRC signaling is uplink transmission, the uplink channel transmission comprises one or more of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, and a PRACH.

8. The method according to claim 5, wherein both the first carrier and the second carrier have channel transmission on the target OFDM symbol, and the method further comprises: determining that transmission B and DCI corresponding to transmission A meet a first relationship, wherein the transmission A is channel transmission of the first carrier on the target OFDM symbol, and the transmission B is channel transmission of the second carrier on the target OFDM symbol.

9. The method according to claim 8, wherein the first relationship comprises:

   a distance between a start moment of a first symbol of the transmission B and an end moment of a last symbol of a PDCCH on which the DCI corresponding to the transmission A is located is greater than or equal to first preset duration; or
   a distance between a start moment of a first symbol of the target OFDM symbol and an end moment of a last symbol of a PDCCH on which the DCI corresponding to the transmission A is located is greater than or equal to second preset duration.

10. The method according to any one of claims 1 to 9, wherein the first carrier and the second carrier belong to one band.

11. A signal transmission method, wherein the method comprises:

    sending scheduling information of at least one of a first carrier and a second carrier on a target orthogonal frequency division multiplexing OFDM symbol, wherein communication directions of the first carrier and the second carrier on the target OFDM symbol are opposite, and the communication directions comprise uplink and downlink; and
    performing channel transmission of a target carrier on the target OFDM symbol, wherein the target carrier is one of carriers that are of the first carrier and the second carrier and that have channel transmission on the target OFDM symbol.

12. The method according to claim 11, wherein that the communication direction is the uplink comprises:

    a first TDD frame structure configuration of the first carrier or a second TDD frame structure configuration of the second carrier is an uplink symbol on the target OFDM symbol, or there is uplink channel transmission on the target symbol; and/or
    that the communication direction is the downlink comprises: a first TDD frame structure configuration of the first carrier or a second TDD frame structure configuration of the second carrier is a downlink symbol on the target OFDM symbol, or there is downlink channel transmission on the target symbol.

13. The method according to claim 11 or 12, wherein that the target carrier is one of carriers that are of the first carrier and the second carrier and that have channel transmission comprises: if one of the first carrier and the second carrier has channel transmission, and the other carrier does not have channel transmission, the target carrier is the carrier that has channel transmission.

14. The method according to claim 11 or 12, wherein that the target carrier is one of carriers that are of the first carrier and the second carrier and that have channel transmission comprises: if both the first carrier and the second carrier have channel transmission on the target OFDM symbol, the first carrier comprises channel transmission scheduled or triggered by using downlink control information DCI, and the second carrier comprises channel transmission configured by using system information or RRC signaling, the target carrier is the first carrier.

15. The method according to claim 14, wherein both the first carrier and the second carrier have channel transmission on the target OFDM symbol, and transmission B and DCI corresponding to transmission A meet a first relationship, wherein the transmission A is channel transmission of the first carrier on the target OFDM symbol, and the transmission B is channel transmission of the second carrier on the target OFDM symbol.

16. The method according to claim 15, wherein the first relationship comprises:

    a distance between a start moment of a first symbol of the transmission B and an end moment of a last symbol of a PDCCH on which the DCI corresponding to the transmission A is located is greater than or equal to first preset duration; or
    a distance between a start moment of a first symbol of the target OFDM symbol and an end moment of a last symbol of a PDCCH on which the DCI corresponding to the transmission A is located is greater than or equal to second preset duration.

17. The method according to any one of claims 11 to 16, wherein the first carrier and the second carrier belong to one band.

18. A communication apparatus, wherein the apparatus comprises:

a transceiver module, configured to receive scheduling information of at least one of a first carrier and a second carrier on a target orthogonal frequency division multiplexing OFDM symbol, wherein communication directions of the first carrier and the second carrier on the target OFDM symbol are opposite, and the communication directions comprise uplink and downlink; and

the transceiver module, further configured to perform channel transmission of a target carrier on the target OFDM symbol, wherein the target carrier is one of carriers that are determined based on the scheduling information, that are of the first carrier and the second carrier, and that have channel transmission on the target OFDM symbol.

19. The apparatus according to claim 18, wherein that the communication direction is the uplink comprises:

a first TDD frame structure configuration of the first carrier or a second TDD frame structure configuration of the second carrier is an uplink symbol on the target OFDM symbol, or there is uplink channel transmission on the target OFDM symbol; and/or

that the communication direction is the downlink comprises: a first TDD frame structure configuration of the first carrier or a second TDD frame structure configuration of the second carrier is a downlink symbol on the target OFDM symbol, or there is downlink channel transmission on the target symbol.

20. The apparatus according to claim 18 or 19, wherein that the target carrier is one of carriers that are of the first carrier and the second carrier and that have channel transmission comprises: if one of the first carrier and the second carrier has channel transmission, and the other carrier does not have channel transmission, the target carrier is the carrier that has channel transmission.

21. The apparatus according to claim 18, wherein the first carrier has channel transmission on the target OFDM symbol, the target carrier is the first carrier, channel transmission of the first carrier is downlink channel transmission, and the downlink channel transmission comprises at least one of the following: a synchronization signal/broadcast channel block SSB, a physical downlink control channel PDCCH, a physical downlink shared channel PDSCH, or a channel state information-reference signal CSI-RS; or

the first carrier has channel transmission on the target OFDM symbol, the target carrier is the first carrier, channel transmission of the first carrier is uplink channel transmission, and the uplink channel transmission comprises at least one of the following: a physical uplink shared channel PUSCH, a physical uplink control channel PUCCH, a physical random access channel PRACH, or an uplink sounding reference signal SRS.

22. The apparatus according to claim 18 or 19, wherein that the target carrier is one of carriers that are of the first carrier and the second carrier and that have channel transmission comprises: if both the first carrier and the second carrier have channel transmission on the target OFDM symbol, the first carrier comprises channel transmission scheduled or triggered by using downlink control information DCI, and the second carrier comprises channel transmission configured by using system information or RRC signaling, the target carrier is the first carrier.

23. The apparatus according to claim 22, wherein when the channel transmission scheduled or triggered by using the downlink control information DCI is uplink channel transmission, the uplink channel transmission comprises at least one of the following:

a PUSCH, a PUCCH carrying a hybrid automatic repeat request-acknowledgment HARQ-ACK of a PDSCH that is dynamically scheduled, a PUCCH carrying aperiodic-channel state information A-CSI, an aperiodic SRS, and a PRACH; and

when the channel transmission scheduled or triggered by using the downlink control information DCI is downlink channel transmission, the downlink channel transmission comprises at least one of the following: a PDSCH and a CSI-RS.

24. The apparatus according to claim 22 or 23, wherein when the channel transmission configured by using the system information or the RRC signaling is downlink transmission, the downlink channel transmission comprises at least one of the following: a PDCCH, a semi-persistent scheduling SPS PDSCH, a channel state information-reference signal CSI-RS, and an SSB; and

when the channel transmission configured by using the system information or the RRC signaling is uplink transmission, the downlink channel transmission comprises one or more of the following: a PUSCH, a configured PUCCH carrying a HARQ-ACK of an SPS PDSCH, a PUCCH carrying a scheduling request SR, a PUCCH carrying periodic CSI or semi-persistent CSI, a periodic or semi-persistent SRS, and a PRACH.

25. The apparatus according to claim 22, wherein the apparatus further comprises a processing module, configured to determine that transmission B and DCI corresponding to transmission A meet a first relationship, wherein the transmission A is channel transmission of the first carrier on the target OFDM symbol, and the transmission B is channel transmission of the second carrier on the target OFDM symbol.

26. The apparatus according to claim 25, wherein the first relationship comprises:

a distance between a start moment of a first symbol of the transmission B and an end moment of a last symbol of a PDCCH on which the DCI corresponding to the transmission A is located is greater than or equal to first preset duration; or
a distance between a start moment of a first symbol of the target OFDM symbol and an end moment of a last symbol of a PDCCH on which the DCI corresponding to the transmission A is located is greater than or equal to second preset duration.

27. The apparatus according to any one of claims 18 to 26, wherein the first carrier and the second carrier belong to one band.

28. A signal transmission apparatus, wherein the apparatus comprises:

a transceiver module, configured to send scheduling information of at least one of a first carrier and a second carrier on a target orthogonal frequency division multiplexing OFDM symbol, wherein communication directions of the first carrier and the second carrier on the target OFDM symbol are opposite, and the communication directions comprise uplink and downlink; and
the transceiver module, further configured to perform channel transmission of a target carrier on the target OFDM symbol, wherein the target carrier is one of carriers that are determined based on the scheduling information, that are of the first carrier and the second carrier, and that have channel transmission on the target OFDM symbol.

29. The apparatus according to claim 28, wherein that the communication direction is the uplink comprises:

a first TDD frame structure configuration of the first carrier or a second TDD frame structure configuration of the second carrier is an uplink symbol on the target OFDM symbol, or there is uplink channel transmission on the target symbol; and/or
that the communication direction is the downlink comprises: a first TDD frame structure configuration of the first carrier or a second TDD frame structure configuration of the second carrier is a downlink symbol on the target OFDM symbol, or there is downlink channel transmission on the target symbol.

30. The apparatus according to claim 28 or 29, wherein that the target carrier is one of carriers that are of the first carrier and the second carrier and that have channel transmission comprises: if one of the first carrier and the second carrier has channel transmission, and the other carrier does not have channel transmission, the target carrier is the carrier that has channel transmission.

31. The apparatus according to claim 28 or 29, wherein that the target carrier is one of carriers that are of the first carrier and the second carrier and that have channel transmission comprises: if both the first carrier and the second carrier have channel transmission on the target OFDM symbol, the first carrier comprises channel transmission scheduled or triggered by using downlink control information DCI, and the second carrier comprises channel transmission configured by using system information or RRC signaling, the target carrier is the first carrier.

32. The apparatus according to claim 31, wherein the apparatus further comprises a processing module, configured to determine that transmission B and DCI corresponding to transmission A meet a first relationship, wherein the transmission A is channel transmission of the first carrier on the target OFDM symbol, and the transmission B is channel transmission of the second carrier on the target OFDM symbol.

33. The apparatus according to claim 32, wherein the first relationship comprises:

a distance between a start moment of a first symbol of the transmission B and an end moment of a last symbol of a PDCCH on which the DCI corresponding to the transmission A is located is greater than or equal to first preset duration; or

a distance between a start moment of a first symbol of the target OFDM symbol and an end moment of a last symbol of a PDCCH on which the DCI corresponding to the transmission A is located is greater than or equal to second preset duration.

34. The apparatus according to any one of claims 28 to 33, wherein the first carrier and the second carrier belong to one band.

35. A communication apparatus, wherein the communication apparatus comprises at least one processor and a communication interface, the communication interface is configured to receive a signal from a communication apparatus other than the communication apparatus and transmit the signal to the processor, or send a signal from the at least one processor to a communication apparatus other than the communication apparatus, and the at least one processor is configured to implement the method according to any one of claims 1 to 10 by using a logic circuit or executing code instructions; or enable the electronic apparatus to perform the method according to any one of claims 11 to 17.

36. A computer-readable storage medium, wherein the computer-readable storage medium stores instructions, and when the instructions are run, the method according to any one of claims 1 to 10 or the method according to any one of claims 11 to 17 is implemented.

37. A computer program product, comprising instructions, wherein when the computer program product is run on a computer, the computer is enabled to perform the method according to any one of claims 1 to 10, or the computer is enabled to perform the method according to any one of claims 11 to 17.

38. A chip system, wherein the chip system comprises a processor, may further comprise a memory, and is configured to implement the method according to any one of claims 1 to 10, or is configured to implement the method according to any one of claims 11 to 17.

39. A communication system, wherein the communication system comprises the apparatus according to any one of claims 18 to 27, and/or comprises the apparatus according to any one of claims 28 to 24.

FIG. 1

FIG. 2

| slot #n | | | | | | | | | |
|---|---|---|---|---|---|---|---|---|---|
| 6 | 2 | 6 | DL | F | UL | ... | | | |

FIG. 3

| Frequency band #1 | U | U | U | F | D | D |
|---|---|---|---|---|---|---|

| Frequency band #2 | D | D | D | F | U | U |
|---|---|---|---|---|---|---|

FIG. 4

| Terminal device | | Network device |
|---|---|---|

201: Scheduling information of at least one of a first carrier and a second carrier on a target orthogonal frequency division multiplexing OFDM symbol, where communication directions of the first carrier and the second carrier on the target OFDM symbol are opposite, and the communication directions include uplink and downlink

202: Perform channel transmission of a target carrier on the target OFDM symbol, where the target carrier is one of carriers that are determined based on the scheduling information, that are of the first carrier and the second carrier, and that have channel transmission on the target OFDM symbol

FIG. 5

Target OFDM symbol 1

| Carrier #1 | U | U | U | F | D | D | First TDD frame structure |

| Carrier #2 | D | D | D | F | U | U | Second TDD frame structure |

Target OFDM symbol 2

FIG. 6

PDCCH    t1    t3  t2

Carrier #1    D    U    Transmission A

Carrier #2    D    Transmission B

T1≤first preset duration

FIG. 7

PDCCH    r1    r2    Target OFDM symbol

Carrier #1    D    U    U    Transmission A

Carrier #2    D    D    Transmission B

T2≤second preset duration

FIG. 8

Terminal device

Network device

301: Scheduling information of at least one carrier in a first carrier set on a target OFDM symbol, where the first carrier set includes a first carrier and a second carrier, communication directions of the first carrier and the second carrier on the target OFDM symbol are opposite, and the communication directions include uplink and downlink

302: Perform channel transmission of a reference carrier on the target OFDM symbol, where the reference carrier is one of carriers that are determined based on the scheduling information, that are in the first carrier set, and that have channel transmission on the target OFDM symbol

FIG. 9

400

Communication apparatus

Transceiver module 401

Processing module 402

FIG. 10

500

Communication apparatus

Transceiver module ⌒501

Processing module ⌒502

FIG. 11

Electronic apparatus 800

Memory 801

Processor 802

Bus 804

Communication interface 803

FIG. 12

## INTERNATIONAL SEARCH REPORT

| International application No. |
|---|
| **PCT/CN2022/099642** |

**A.    CLASSIFICATION OF SUBJECT MATTER**

H04W 72/04(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; DWPI; EPTXT; USTXT; WOTXT; IEEE; 3GPP: 调度, 载波, 互补帧, 跨载波调度, 上行, 下行, 方向, 相反, 不同, 反向, 时分, 符号, 互补, OFDM, schedule, carrier, uplink, UL, downlink, DL, TDD, complementary, frame, differ, symbol, direction, reverse, opposite

**C.    DOCUMENTS CONSIDERED TO BE RELEVANT**

| Category* | Citation of document, with indication, where appropriate, of the relevant passages | Relevant to claim No. |
|---|---|---|
| X | CN 112713976 A (BEIJING SAMSUNG COMMUNICATION TECHNOLOGY RESEARCH CO., LTD. et al.) 27 April 2021 (2021-04-27) description, paragraphs [0004]-[0243], and figures 1-8 | 1-39 |
| X | CN 102811486 A (CHINA MOBILE COMMUNICATIONS CORP.) 05 December 2012 (2012-12-05) description, paragraphs [0004]-[0111], and figures 1a-7 | 1-39 |
| A | CN 110249677 A (QUALCOMM INC.) 17 September 2019 (2019-09-17) entire document | 1-39 |
| A | CN 110831217 A (HUAWEI TECHNOLOGIES CO., LTD.) 21 February 2020 (2020-02-21) entire document | 1-39 |
| A | US 2019363843 A1 (GORDAYCHIK, B.) 28 November 2019 (2019-11-28) entire document | 1-39 |
| A | US 2018077644 A1 (OFINNO TECHNOLOGIES, L.L.C.) 15 March 2018 (2018-03-15) entire document | 1-39 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2022** | **17 August 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 112713976 | A | 27 April 2021 | EP | 4023017 | A1 | 06 July 2022 |
| | | | | KR | 20210050442 | A | 07 May 2021 |
| | | | | WO | 2021080164 | A1 | 29 April 2021 |
| CN | 102811486 | A | 05 December 2012 | WO | 2012163145 | A1 | 06 December 2012 |
| | | | | EP | 2717640 | A1 | 09 April 2014 |
| | | | | EP | 2717640 | A4 | 19 November 2014 |
| | | | | CN | 102811486 | B | 14 December 2016 |
| | | | | EP | 2717640 | B1 | 08 May 2019 |
| CN | 110249677 | A | 17 September 2019 | US | 2019215112 | A1 | 11 July 2019 |
| | | | | US | 2018219654 | A1 | 02 August 2018 |
| | | | | WO | 2018144728 | A1 | 09 August 2018 |
| | | | | TW | 201836314 | A | 01 October 2018 |
| | | | | EP | 3577974 | A1 | 11 December 2019 |
| | | | | CN | 112564879 | A | 26 March 2021 |
| | | | | US | 10211955 | B2 | 19 February 2019 |
| | | | | CN | 110249677 | B | 08 December 2020 |
| | | | | TW | 739995 | B1 | 21 September 2021 |
| | | | | IN | 201947025217 | A | 02 August 2019 |
| CN | 110831217 | A | 21 February 2020 | US | 2021168835 | A1 | 03 June 2021 |
| | | | | WO | 2020029955 | A1 | 13 February 2020 |
| | | | | EP | 3823396 | A1 | 19 May 2021 |
| | | | | IN | 202137006205 | A | 12 March 2021 |
| | | | | VN | 78193 | A | 25 May 2021 |
| | | | | EP | 3823396 | A4 | 13 October 2021 |
| | | | | CN | 110831217 | B | 14 December 2021 |
| US | 2019363843 | A1 | 28 November 2019 | US | 2021068095 | A1 | 04 March 2021 |
| | | | | US | 2020274656 | A1 | 27 August 2020 |
| | | | | US | 10880895 | B2 | 29 December 2020 |
| US | 2018077644 | A1 | 15 March 2018 | US | 2020374800 | A1 | 26 November 2020 |
| | | | | US | 2019268848 | A1 | 29 August 2019 |
| | | | | US | 10321398 | B2 | 11 June 2019 |

Form PCT/ISA/210 (patent family annex) (January 2015)

**REFERENCES CITED IN THE DESCRIPTION**

**Patent documents cited in the description**

- CN 202110797862